(19) **Europäisches Patentamt / European Patent Office / Office européen des brevets**

(11) **EP 4 492 786 A1**

(12) # EUROPEAN PATENT APPLICATION
published in accordance with Art. 153(4) EPC

(43) Date of publication:
**15.01.2025 Bulletin 2025/03**

(21) Application number: **23784193.7**

(22) Date of filing: **28.03.2023**

(51) International Patent Classification (IPC):
**H04N 19/33** $^{(2014.01)}$

(52) Cooperative Patent Classification (CPC):
**H04N 19/149; H04N 19/167; H04N 19/176; H04N 19/182; H04N 19/33; H04N 19/91**

(86) International application number:
**PCT/CN2023/084290**

(87) International publication number:
**WO 2023/193629 (12.10.2023 Gazette 2023/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.04.2022 CN 202210365196**

(71) Applicant: **Huawei Technologies Co., Ltd. Shenzhen, Guangdong 518129 (CN)**

(72) Inventors:
• **MAO, Jue**
  **Shenzhen, Guangdong 518129 (CN)**
• **ZHAO, Yin**
  **Shenzhen, Guangdong 518129 (CN)**
• **YANG, Haitao**
  **Shenzhen, Guangdong 518129 (CN)**
• **ZHANG, Lian**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **CODING METHOD AND APPARATUS FOR REGION ENHANCEMENT LAYER, AND DECODING METHOD AND APPARATUS FOR AREA ENHANCEMENT LAYER**

(57)    This application provides a method and an apparatus for encoding and decoding a region enhancement layer. The method for encoding the region enhancement layer in this application includes: obtaining reconstructed pixels of a base layer of a target region; inputting the reconstructed pixels into a correction network to obtain correction information of the target region; inputting the correction information and original pixels of the target region into an encoding network to obtain a residual feature map of an enhancement layer of the target region; and encoding the residual feature map to obtain an enhancement layer bitstream of the target region. This application can improve encoding efficiency and encoding precision of the enhancement layer.

FIG. 8

**Description**

This application claims priority to Chinese Patent Application No. 202210365196.9, filed with the China National Intellectual Property Administration on April 8, 2022 and entitled "METHOD AND APPARATUS FOR ENCODING AND DECODING REGION ENHANCEMENT LAYER", which is incorporated herein by reference in its entirety.

**TECHNICAL FIELD**

This application relates to video encoding and decoding technologies, and in particular, to a method and an apparatus for encoding and decoding a region enhancement layer.

**BACKGROUND**

In a video transmission process, especially in a multi-user scenario, because different users are in different network bandwidths and their devices have different processing capabilities, a requirement for adaptive bit rate adjustment and control for different users is proposed. In layered video coding, also referred to as scalable video coding, the concept of layering in time domain, space domain, and quality is put forward, and information of an enhancement layer is added based on a base layer, so that video content with a higher frame rate, higher resolution, and higher quality than that of the base layer can be obtained. Different users can choose whether to use bitstreams of the enhancement layer to match network bandwidths and processing capabilities of devices.

However, in the scalable video coding, there are still problems of high complexity and low encoding and decoding efficiency.

**SUMMARY**

This application provides a method and an apparatus for encoding and decoding a region enhancement layer, to improve encoding efficiency and encoding precision of an enhancement layer.

According to a first aspect, this application provides a method for encoding a region enhancement layer. The method includes: obtaining reconstructed pixels of a base layer of a target region; inputting the reconstructed pixels into a correction network to obtain correction information of the target region; inputting the correction information and original pixels of the target region into an encoding network to obtain a residual feature map of an enhancement layer of the target region; and encoding the residual feature map to obtain an enhancement layer bitstream of the target region.

In this embodiment of this application, the correction network removes noise signals not beneficial to encoding of an AI enhancement layer from the reconstructed pixels of the base layer, to obtain the correction information, and then encodes the residual feature map of the enhancement layer of the target region based on the correction information. Encoding of the enhancement layer is performed only on a region in need (the target region). This can reduce encoding complexity of the enhancement layer and improve encoding efficiency of the enhancement layer. In addition, encoding is performed based on the correction information. This can improve encoding accuracy.

The target region is intended to represent a location of an image block that is focused on and processed in one encoding process in the solution in this embodiment of this application. A shape of the target region may be a regular rectangle or square, or may be an irregular shape. This is not specifically limited herein.

In an encoding process, an initially obtained image block may be referred to as an original block, and pixels included in the image block may be referred to as original pixels. A reconstructed image block may be referred to as a reconstructed block, and pixels included in the reconstructed image block may be referred to as reconstructed pixels. However, in scalable video coding, although different layers have different resolutions, frame rates, or quality, encoding processes are roughly similar, and in particular, each layer includes an initial image block and a reconstructed image block.

Therefore, in this embodiment of this application, for the target region, there may be the concepts as follows: At a base layer, pixels included in an initially obtained region are referred to as original pixels of a base layer of the region, and pixels included in a reconstructed region are referred to as reconstructed pixels of a base layer of the region.

At an enhancement layer, pixels included in an initially obtained region are referred to as original pixels of an enhancement layer of the region, and pixels included in a reconstructed region are referred to as reconstructed pixels of an enhancement layer of the region.

It should be noted that the concept of a quantity of pixels is not mentioned in the foregoing description of the original pixels or the reconstructed pixels. However, it should be understood that the region usually includes a plurality of pixels. This is not specifically limited in embodiments of this application.

In a possible implementation, the reconstructed pixels are input into the correction network to obtain at least one of a plurality of pixel values and a plurality of feature values, where the correction information is the plurality of pixel values or the plurality of feature values.

In this embodiment of this application, the correction network may be implemented by using a neural network. For example, the correction network is constructed by using a neural network formed by interpolating and cascading four convolutional layers/deconvolutional layers and three activation layers. An input into the correction network is the reconstructed pixels of the base layer of the target region, and an output is the correction information corresponding to the target region. The correction network functions to remove the noise signals not beneficial to encoding of the AI enhancement layer. A size of a convolution kernel of each convolutional layer may be set to $3 \times 3$, a quantity of channels for outputting a feature map is set to M, and downsampling by a factor of 2 is performed on a width and a height of each convolutional layer. It should be understood that the foregoing example does not constitute a specific limitation. The size of the convolution kernel, the quantity of channels for the feature map, the downsampling factor, a quantity of downsampling times, a quantity of convolutional layers, and a quantity of activation layers may all be adjusted. This is not specifically limited in embodiments of this application.

In this embodiment of this application, a plurality of probability distributions may be obtained, where the plurality of probability distributions correspond to the plurality of feature values included in the residual feature map. Then, entropy encoding is performed on the corresponding feature values in the residual feature map based on the plurality of probability distributions respectively to obtain the enhancement layer bitstream.

The residual feature map of the enhancement layer of the target region includes the plurality of feature values. To perform entropy encoding on the plurality of feature values, the probability distributions of the plurality of feature values need to be obtained. The following are several methods for obtaining the plurality of probability distributions:

1. Obtain the plurality of probability distributions based on the correction information.

1.1. Input the correction information into a probability estimation network to obtain the plurality of probability distributions.

The probability estimation network may also include a convolutional layer and a GDN. Whether the probability estimation network is another activation function is not limited. In this embodiment of this application, a quantity of convolutional layers is not limited, and a size of a convolution kernel is not limited either. In this embodiment of this application, a probability distribution model is first used for modeling, then the correction information is input into the probability estimation network to obtain model parameters, and the model parameters are substituted into the probability distribution model to obtain the probability distributions. The probability distribution model may be a Gaussian single model (Gaussian single model, GSM), an asymmetric Gaussian model, a Gaussian mixture model (Gaussian mixture model, GMM), or a Laplace distribution (Laplace distribution) model. When the probability distributions are Gaussian distributions, the model parameters are values of a mean value parameter $\mu$ and a variance $\sigma$ of the Gaussian distributions. When the probability distributions are Laplacian distributions, the model parameters are values of a location parameter $\mu$ and a scale parameter b of the Laplacian distributions. It should be understood that, in addition to the foregoing probability distribution model, another model may alternatively be used. This is not specifically limited herein.

1.2. Obtain the plurality of probability distributions based on the correction information and reconstructed side information of the residual feature map.

In this embodiment of this application, the residual feature map of the enhancement layer of the target region may be input into a side information extraction network to obtain side information of the residual feature map, entropy encoding is performed on the side information, and encoded side information is written into a bitstream. In this case, the side information of the residual feature map is used as the reconstructed side information of the residual feature map.

a. When the correction information is the plurality of feature values, input the reconstructed side information into a side information processing network to obtain a first feature map, and input the plurality of feature values and the first feature map into the probability estimation network to obtain the plurality of probability distributions.

b. When the correction information is the plurality of pixel values, input the plurality of pixel values into a feature estimation network (estimate) to obtain a second feature map, input the reconstructed side information into a side information processing network to obtain a first feature map, and input the first feature map and the second feature map into the probability estimation network to obtain the plurality of probability distributions.

2. Obtain the plurality of probability distributions based on reconstructed side information of the residual feature map.

2.1. Input the reconstructed side information into a probability estimation network to obtain the plurality of probability distributions.

2.2. Obtain the plurality of probability distributions based on the reconstructed side information and the reconstructed pixels.

In this embodiment of this application, the reconstructed pixels of the residual feature map may be input into a feature estimation network to obtain a third feature map, the reconstructed side information may be input into a side information processing network to obtain a first feature map, and the first feature map and the third feature map may be input into the probability estimation network to obtain the plurality of probability distributions.

In a possible implementation, the method further includes: inputting the residual feature map into the side information extraction network to obtain side information of the residual feature map; and performing entropy encoding on the side information or quantized side information, and writing encoded side information into a bitstream.

In a possible implementation, the encoding network includes a first encoding network; and the inputting the correction information and original pixels of the target region into an encoding network to obtain a residual feature map of an enhancement layer of the target region includes: when the correction information is the plurality of pixel values, performing subtraction on the original pixels and corresponding pixel values in the correction information; and inputting a subtraction result into the first encoding network to obtain the residual feature map. For example, the corresponding may be understood as location corresponding. That is, subtraction is performed on the original pixels and the pixel values of corresponding locations in the correction information.

In a possible implementation, the encoding network includes a second encoding network; and the inputting the correction information and original pixels of the target region into an encoding network to obtain a residual feature map of an enhancement layer of the target region includes: inputting the original pixels into the second encoding network; when the correction information is the plurality of feature values, performing subtraction on an output of any convolutional layer in the second encoding network and corresponding feature values in the correction information; and inputting a subtraction result into a network layer after the any convolutional layer in the second encoding network, to obtain the residual feature map. For example, the corresponding may be understood as location corresponding. That is, subtraction is performed on an output of any convolutional layer in the second encoding network and feature values of corresponding locations in the correction information.

As described above, the correction information may have two cases: one is the plurality of pixel values, and the other is the plurality of feature values. Correspondingly, the encoding network may also use two structures. In this embodiment of this application, an input into the encoding network (Encoder) of an encoder side is the correction information and the original pixels of the target region, and an output is the residual feature map of the enhancement layer of the target region. It should be noted that, in addition to the foregoing two examples of the encoding network, an encoding network of another structure may alternatively be used in embodiments of this application. This is not specifically limited herein.

In a possible implementation, the obtaining reconstructed pixels of a base layer of a target region may include: encoding an image to which the target region belongs, to obtain a base layer bitstream of the image; decoding the base layer bitstream to obtain a reconstructed image of a base layer of the image; and determining, based on the reconstructed image, at least one region to be enhanced, where the target region is one of the at least one region.

The determining, based on the reconstructed image, at least one region to be enhanced includes: dividing the reconstructed image to obtain a plurality of regions; and determining a region whose variance is greater than a first threshold in the plurality of regions as the at least one region; or determining a proportion of pixels whose gradients are greater than a second threshold and that are in total pixels in each of the plurality of regions, and determining a region whose proportion is greater than a third threshold as the at least one region. For example, if a variance of a region is greater than a threshold t1, and t1 > 0, it may be considered that texture of the region is complex, and therefore enhancement processing needs to be performed to improve image quality; or a proportion of pixels whose gradients are greater than the second threshold and that are in total pixels in the region is greater than the third threshold. For example, if a proportion of pixels whose gradients are greater than a threshold a and that are in total pixels in a region is greater than a threshold t2, a > 0, and 0 < t2 < 1, it may also be considered that texture of the region is complex, and therefore enhancement processing needs to be performed to improve image quality.

For a base layer, the encoder side encodes an original image to obtain a base layer bitstream, and then the base layer bitstream is decoded to obtain a reconstructed image of the base layer. For example, a VVC encoder encodes the original image to obtain the base layer bitstream, and a VVC decoder decodes the base layer bitstream to obtain the reconstructed image of the base layer. It should be understood that another encoder, an HEVC codec, or an AVC codec may alternatively be used for the base layer. This is not specifically limited in embodiments of this application.

In the foregoing plurality of regions, based on attributes or features of the image, not all regions need to be enhanced, and only encoding and decoding of a base layer need to be performed on one or more regions to meet an image quality requirement. Therefore, in this embodiment of this application, the target region is a region to be enhanced. In subsequent encoding of the enhancement layer, encoding and decoding of the enhancement layer may be performed only on the target region. In this way, there is no need to enhance the entire image, and encoding and decoding efficiency of the image may be improved.

In a possible implementation, the method further includes: using the side information of the residual feature map as the reconstructed side information of the residual feature map.

According to a second aspect, this application provides a method for decoding a region enhancement layer. The method includes: obtaining reconstructed pixels of a base layer of a target region; inputting the reconstructed pixels into a correction network to obtain correction information of the target region; obtaining an enhancement layer bitstream of the target region; decoding the enhancement layer bitstream to obtain a residual feature map of an enhancement layer of the target region; and inputting the residual feature map and the correction information into a decoding network to obtain reconstructed pixels of the enhancement layer of the target region.

In this embodiment of this application, the correction network removes noise signals not beneficial to encoding of an AI enhancement layer from the reconstructed pixels of the base layer, to obtain the correction information, and then decodes the enhancement layer bitstream based on the correction information. Decoding of the enhancement layer is performed only on a region in need (the target region). This can reduce decoding complexity of the enhancement layer and improve decoding efficiency of the enhancement layer. In addition, decoding is performed based on the correction information. This can improve decoding accuracy.

In a possible implementation, the inputting the reconstructed pixels into a correction network to obtain correction information of the target region includes: inputting the reconstructed pixels into the correction network to obtain at least one of a plurality of pixel values and a plurality of feature values of the target region, where the correction information is the plurality of pixel values or the plurality of feature values.

In a possible implementation, the decoding the enhancement layer bitstream to obtain a residual feature map of an enhancement layer of the target region includes: obtaining a plurality of probability distributions based on the correction information, where the plurality of probability distributions correspond to a plurality of feature value bitstreams included in the enhancement layer bitstream; and performing entropy decoding on the corresponding feature value bitstreams in the enhancement layer bitstream based on the plurality of probability distributions respectively to obtain the residual feature map.

In a possible implementation, the obtaining the plurality of probability distributions based on the correction information includes: inputting the correction information into a probability estimation network to obtain the plurality of probability distributions.

In a possible implementation, the obtaining the plurality of probability distributions based on the correction information includes: obtaining the plurality of probability distributions based on the correction information and reconstructed side information of the residual feature map.

In a possible implementation, the obtaining the plurality of probability distributions based on the correction information and reconstructed side information of the residual feature map includes: when the correction information is the plurality of feature values, inputting the reconstructed side information into a side information processing network to obtain a first feature map; and inputting the plurality of feature values and the first feature map into a probability estimation network to obtain the plurality of probability distributions.

In a possible implementation, the obtaining the plurality of probability distributions based on the correction information and reconstructed side information of the residual feature map includes: when the correction information is the plurality of pixel values, inputting the plurality of pixel values into a feature estimation network to obtain a second feature map; inputting the reconstructed side information into a side information processing network to obtain a first feature map; and inputting the first feature map and the second feature map into a probability estimation network to obtain the plurality of probability distributions.

In a possible implementation, the decoding the enhancement layer bitstream to obtain a residual feature map of an enhancement layer of the target region includes: obtaining a plurality of probability distributions based on reconstructed side information of the residual feature map, where the plurality of probability distributions correspond to a plurality of feature value bitstreams included in the enhancement layer bitstream; and performing entropy decoding on the corresponding feature value bitstreams in the enhancement layer bitstream based on the plurality of probability distributions respectively to obtain the residual feature map.

In a possible implementation, the obtaining the plurality of probability distributions based on reconstructed side information of the residual feature map includes: inputting the reconstructed side information into a probability estimation network to obtain the plurality of probability distributions.

In a possible implementation, the obtaining the plurality of probability distributions based on reconstructed side information of the residual feature map includes: obtaining the plurality of probability distributions based on the reconstructed side information and the reconstructed pixels.

In a possible implementation, the obtaining the plurality of probability distributions based on the reconstructed side information and the reconstructed pixels includes: inputting the reconstructed pixels into a feature estimation network to obtain a third feature map; inputting the reconstructed side information into a side information processing network to obtain a first feature map; and inputting the first feature map and the third feature map into a probability estimation network to obtain the plurality of probability distributions.

In a possible implementation, the method further includes: inputting the residual feature map into a side information extraction network to obtain side information of the residual feature map; and using the side information as the reconstructed side information of the residual feature map.

In a possible implementation, the method further includes: obtaining a side information bitstream of the target region; and parsing the side information bitstream to obtain the reconstructed side information.

In a possible implementation, the decoding network includes a first decoding network; and the inputting the residual feature map and the correction information into a decoding network to obtain reconstructed pixels of the enhancement layer of the target region includes: inputting the residual feature map into the first decoding network to obtain reconstructed residual pixels of the enhancement layer of the target region; and when the correction information is the plurality of pixel values, summing the reconstructed residual pixels and corresponding pixel values in the correction information to obtain the reconstructed pixels.

In a possible implementation, the decoding network includes a second decoding network; and the inputting the residual feature map and the correction information into a decoding network to obtain reconstructed pixels of the enhancement layer of the target region includes: inputting the residual feature map into the second decoding network; when the correction information is the plurality of feature values, summing an output of any convolutional layer in the second decoding network and corresponding feature values in the correction information; and inputting a summation result into a network layer after the any convolutional layer in the second decoding network, to obtain the reconstructed pixels.

In a possible implementation, the method further includes: obtaining a base layer bitstream of an image to which the target region belongs; parsing the base layer bitstream to obtain a reconstructed image of a base layer of the image; and determining, based on the reconstructed image, at least one region to be enhanced, where the target region is one of the at least one region.

In a possible implementation, the determining, based on the reconstructed image, at least one region to be enhanced includes: dividing the reconstructed image to obtain a plurality of regions; and determining a region whose variance is greater than a first threshold in the plurality of regions as the at least one region; or determining a proportion of pixels whose gradients are greater than a second threshold and that are in total pixels in each of the plurality of regions, and determining a region whose proportion is greater than a third threshold as the at least one region.

According to a third aspect, this application provides an encoding apparatus. The encoding apparatus includes: an obtaining module, configured to obtain reconstructed pixels of a base layer of a target region; a processing module, configured to input the reconstructed pixels into a correction network to obtain correction information of the target region; and input the correction information and original pixels of the target region into an encoding network to obtain a residual feature map of an enhancement layer of the target region; and an encoding module, configured to encode the residual feature map to obtain an enhancement layer bitstream of the target region.

In a possible implementation, the processing module is specifically configured to input the reconstructed pixels into the correction network to obtain at least one of a plurality of pixel values and a plurality of feature values of the target region, where the correction information is the plurality of pixel values or the plurality of feature values.

In a possible implementation, the encoding module is specifically configured to: obtain a plurality of probability distributions based on the correction information, where the plurality of probability distributions correspond to the plurality of feature values included in the residual feature map; and perform entropy encoding on the corresponding feature values in the residual feature map based on the plurality of probability distributions respectively to obtain the enhancement layer bitstream.

In a possible implementation, the encoding module is specifically configured to input the correction information into a probability estimation network to obtain the plurality of probability distributions.

In a possible implementation, the encoding module is specifically configured to obtain the plurality of probability distributions based on the correction information and reconstructed side information of the residual feature map.

In a possible implementation, the encoding module is specifically configured to: when the correction information is the plurality of feature values, input the reconstructed side information into a side information processing network to obtain a first feature map; and input the plurality of feature values and the first feature map into a probability estimation network to obtain the plurality of probability distributions.

In a possible implementation, the encoding module is specifically configured to: when the correction information is the plurality of pixel values, input the plurality of pixel values into a feature estimation network to obtain a second feature map; input the reconstructed side information into a side information processing network to obtain a first feature map; and input the first feature map and the second feature map into a probability estimation network to obtain the plurality of probability distributions.

In a possible implementation, the encoding module is specifically configured to: obtain a plurality of probability distributions based on the reconstructed side information of the residual feature map, where the plurality of probability distributions correspond to the plurality of feature values included in the residual feature map; and perform entropy encoding on the corresponding feature values in the residual feature map based on the plurality of probability distributions respectively to obtain the enhancement layer bitstream.

In a possible implementation, the encoding module is specifically configured to input the reconstructed side information into a probability estimation network to obtain the plurality of probability distributions.

In a possible implementation, the encoding module is specifically configured to obtain the plurality of probability distributions based on the reconstructed side information and the reconstructed pixels.

In a possible implementation, the encoding module is specifically configured to: input the reconstructed pixels into a feature estimation network to obtain a third feature map; input the reconstructed side information into a side information processing network to obtain a first feature map; and input the first feature map and the third feature map into a probability estimation network to obtain the plurality of probability distributions.

In a possible implementation, the encoding module is further configured to: input the residual feature map into a side information extraction network to obtain side information of the residual feature map; and perform entropy encoding on the side information or quantized side information, and write encoded side information into a bitstream.

In a possible implementation, the encoding network includes a first encoding network; and the encoding module is specifically configured to: when the correction information is the plurality of pixel values, perform subtraction on the original pixels and corresponding pixel values in the correction information; and input a subtraction result into the first encoding network to obtain the residual feature map.

In a possible implementation, the encoding network includes a second encoding network; and the encoding module is specifically configured to: input the original pixels into the second encoding network; when the correction information is the plurality of feature values, perform subtraction on an output of any convolutional layer in the second encoding network and corresponding feature values in the correction information; and input a subtraction result into a network layer after the any convolutional layer in the second encoding network, to obtain the residual feature map.

In a possible implementation, the encoding module is further configured to: encode an image to which the target region belongs, to obtain a base layer bitstream of the image; decode the base layer bitstream to obtain a reconstructed image of a base layer of the image; and determine, based on the reconstructed image, at least one region to be enhanced, where the target region is one of the at least one region.

In a possible implementation, the encoding module is specifically configured to: divide the reconstructed image to obtain a plurality of regions; and determine a region whose variance is greater than a first threshold in the plurality of regions as the at least one region; or determine a proportion of pixels whose gradients are greater than a second threshold and that are in total pixels in each of the plurality of regions, and determine a region whose proportion is greater than a third threshold as the at least one region.

In a possible implementation, the encoding module is further configured to use the side information of the residual feature map as the reconstructed side information of the residual feature map.

According to a fourth aspect, this application provides a decoding apparatus. The decoding apparatus includes: an obtaining module, configured to obtain reconstructed pixels of a base layer of a target region; a processing module, configured to input the reconstructed pixels into a correction network to obtain correction information of the target region, where the obtaining module is further configured to obtain an enhancement layer bitstream of the target region; and a decoding module, configured to decode the enhancement layer bitstream to obtain a residual feature map of an enhancement layer of the target region, where the processing module is further configured to input the residual feature map and the correction information into a decoding network to obtain reconstructed pixels of the enhancement layer of the target region.

In a possible implementation, the processing module is specifically configured to input the reconstructed pixels into the correction network to obtain at least one of a plurality of pixel values and a plurality of feature values of the target region, where the correction information is the plurality of pixel values or the plurality of feature values.

In a possible implementation, the decoding module is specifically configured to obtain a plurality of probability distributions based on the correction information, where the plurality of probability distributions correspond to a plurality of feature value bitstreams included in the enhancement layer bitstream; and perform entropy decoding on the corresponding feature value bitstreams in the enhancement layer bitstream based on the plurality of probability distributions respectively to obtain the residual feature map.

In a possible implementation, the decoding module is specifically configured to input the correction information into a probability estimation network to obtain the plurality of probability distributions.

In a possible implementation, the decoding module is specifically configured to obtain the plurality of probability distributions based on the correction information and reconstructed side information of the residual feature map.

In a possible implementation, the decoding module is specifically configured to: when the correction information is the plurality of feature values, input the reconstructed side information into a side information processing network to obtain a first feature map; and input the plurality of feature values and the first feature map into a probability estimation network to obtain the plurality of probability distributions.

In a possible implementation, the decoding module is specifically configured to: when the correction information is the plurality of pixel values, input the plurality of pixel values into a feature estimation network to obtain a second feature map; input the reconstructed side information into a side information processing network to obtain a first feature map; and input the first feature map and the second feature map into a probability estimation network to obtain the plurality of probability distributions.

In a possible implementation, the decoding module is specifically configured to obtain a plurality of probability distributions based on the reconstructed side information of the residual feature map, where the plurality of probability distributions correspond to a plurality of feature value bitstreams included in the enhancement layer bitstream; and perform entropy decoding on the corresponding feature value bitstreams in the enhancement layer bitstream based on the plurality of probability distributions respectively to obtain the residual feature map.

In a possible implementation, the decoding module is specifically configured to input the reconstructed side information into a probability estimation network to obtain the plurality of probability distributions.

In a possible implementation, the decoding module is specifically configured to obtain the plurality of probability distributions based on the reconstructed side information and the reconstructed pixels.

In a possible implementation, the decoding module is specifically configured to: input the reconstructed pixels into a feature estimation network to obtain a third feature map; input the reconstructed side information into a side information processing network to obtain a first feature map; and input the first feature map and the third feature map into a probability estimation network to obtain the plurality of probability distributions.

In a possible implementation, the decoding module is further configured to: input the residual feature map into a side information extraction network to obtain side information of the residual feature map; and use the side information as the reconstructed side information of the residual feature map.

In a possible implementation, the decoding module is further configured to: obtain a side information bitstream of the target region; and parse the side information bitstream to obtain the reconstructed side information.

In a possible implementation, the decoding network includes a first decoding network; and the decoding module is specifically configured to: input the residual feature map into the first decoding network to obtain reconstructed residual pixels of the enhancement layer of the target region; and when the correction information is the plurality of pixel values, sum the reconstructed residual pixels and corresponding pixel values in the correction information to obtain the reconstructed pixels.

In a possible implementation, the decoding network includes a second decoding network; and the decoding module is specifically configured to: input the residual feature map into the second decoding network; when the correction information is the plurality of feature values, sum an output of any convolutional layer in the second decoding network and corresponding feature values in the correction information; and input a summation result into a network layer after the any convolutional layer in the second decoding network, to obtain the reconstructed pixels.

In a possible implementation, the decoding module is further configured to: obtain a base layer bitstream of an image to which the target region belongs; parse the base layer bitstream to obtain a reconstructed image of a base layer of the image; and determine, based on the reconstructed image, at least one region to be enhanced, where the target region is one of the at least one region.

In a possible implementation, the decoding module is specifically configured to: divide the reconstructed image to obtain a plurality of regions; and determine a region whose variance is greater than a first threshold in the plurality of regions as the at least one region; or determine a proportion of pixels whose gradients are greater than a second threshold and that are in total pixels in each of the plurality of regions, and determine a region whose proportion is greater than a third threshold as the at least one region.

According to a fifth aspect, this application provides an encoder, including: one or more processors; and a memory, configured to store one or more programs. When the one or more programs are executed by the one or more processors, the one or more processors are enabled to implement the method according to any one of the possible implementations of the first aspect.

According to a sixth aspect, this application provides a decoder, including: one or more processors; and a memory, configured to store one or more programs. When the one or more programs are executed by the one or more processors, the one or more processors are enabled to implement the method according to any one of the possible implementations of the second aspect.

According to a seventh aspect, this application provides a computer-readable storage medium, including a computer program. When the computer program is executed on a computer, the computer is enabled to perform the method according to any one of the possible implementations of the first aspect and the second aspect.

According to an eighth aspect, this application provides a computer program product. The computer program product includes instructions. When the instructions are run on a computer or a processor, the computer or the processor is enabled to implement the method according to any one of the possible implementations of the first aspect and the second aspect.

**BRIEF DESCRIPTION OF DRAWINGS**

FIG. 1 is an example diagram of layers of scalable video coding according to this application;

FIG. 2A is a block diagram of an example of a coding system 10;

FIG. 2B is an example diagram of a video coding system 40;

FIG. 3 is a diagram of a video coding device 400 according to an embodiment of the present invention;

FIG. 4 is a simplified block diagram of an example of an apparatus 500 according to an embodiment;

FIG. 5 is a diagram of an application scenario according to an embodiment of this application;

FIG. 6 is a diagram of an application scenario according to an embodiment of this application;

FIG. 7 is a diagram of an application scenario according to an embodiment of this application;

FIG. 8 is a flowchart of a process 800 of a method for encoding a region enhancement layer according to an embodiment of this application;

FIG. 9a is an example diagram of a correction network;

FIG. 9b is an example diagram of a correction network;

FIG. 9c is an example diagram of a correction network;

FIG. 9d is an example diagram of a correction network;

FIG. 10a is an example diagram of an encoding network;

FIG. 10b is an example diagram of an encoding network;

FIG. 11a is an example diagram of a probability estimation network;

FIG. 11b is an example diagram of a probability estimation network;

FIG. 12 is a flowchart of a process 1200 of a method for decoding a region enhancement layer according to an embodiment of this application;

FIG. 13a is an example diagram of a decoding network;

FIG. 13b is an example diagram of a decoding network;

FIG. 14 is an example diagram of an encoding and decoding process;

FIG. 15 is an example diagram of an encoding and decoding process;

FIG. 16 is an example diagram of an encoding and decoding process;

FIG. 17 is an example diagram of an encoding and decoding process;

FIG. 18 is an example diagram of a structure of an encoding apparatus 1800 according to an embodiment of this application; and

FIG. 19 is an example diagram of a structure of a decoding apparatus 1900 according to an embodiment of this application.

## DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

It should be understood that in this application, "at least one (item)" means one or more and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one item (piece) of a b, or c may indicate a b, c, "a and b", "a and c", "b and c", or "a, b, and c", where a b, and c may be singular or plural.

Embodiments of this application relate to application of a neural network. For ease of understanding, the following first explains and describes related nouns or terms.

1. Neural network

A neural network (neural network, NN) is a machine learning model. The neural network may include neurons. The neuron may be an operation unit that uses $x_s$ and an intercept of 1 as inputs, where an output of the operation unit may be as follows:

$$h_{W,b}(x) = f(W^T x) = f(\sum_{s=1}^{n} W_s x_s + b) \qquad (1\text{-}1)$$

s=1, 2, ..., or n, n is a natural number greater than 1, $W_s$ is a weight of $x_s$, and b is a bias of the neuron. f is an activation function (activation functions) of the neuron, and is configured to introduce a non-linear feature into the neural network to convert an input signal in the neuron into an output signal. The output signal of the activation function may be used as an input of a next convolutional layer. The activation function may be a non-linear function such as ReLU. The neural network is a network formed by connecting many single neurons together. To be specific, an output of a neuron may be an input of another neuron. An input of each neuron may be connected to a local receptive field (local receptive field) of a previous layer to extract a feature of the local receptive field. The local receptive field may be a region including several neurons.

2. Multi-layer perceptron (multi-layer perceptron, MLP)

An MLP is a simple deep neural network (deep neural network, DNN) (different layers are fully connected), and is also referred to as a multi-layer neural network. The MLP may be understood as a neural network with a plurality of hidden layers. There is no special measurement criterion for "a plurality of" herein. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems to be complex, the DNN is actually not complex in terms of work at each layer, and is simply expressed as the following linear relationship expression: $\vec{y} = \alpha(W\vec{x} + \vec{b})$. Herein, $\vec{x}$ is an input vector, $\vec{y}$ is an output vector, $\vec{b}$ is an offset vector, W is a weight matrix (also referred to as a coefficient), and $\alpha()$ is an activation function. At each layer, the output vector $\vec{y}$ is obtained by performing such a simple operation on the input vector $\vec{x}$. Because there are a large quantity of DNN layers, there are a large quantity of coefficients W and offset vectors $\vec{b}$. Definitions of these parameters in the DNN are as follows: The coefficient W is used as an example. It is assumed that in a DNN having three layers, a linear coefficient from a fourth neuron at a second layer to a second neuron at a third layer is defined as $W_{24}^3$. The superscript 3 represents a layer at which the coefficient W is located, and the subscript corresponds to an output third-layer index 2 and an input second-layer index 4. In conclusion, a coefficient from a $k^{th}$ neuron at an $(L\text{-}1)^{th}$ layer to a $j^{th}$ neuron at an $L^{th}$ layer is defined as $W_{jk}^L$. It should be noted that the input layer does not have parameters W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

3 Convolutional neural network

A convolutional neural network (convolutional neuron network, CNN) is a deep neural network with a convolutional structure, and a deep learning (deep learning) architecture. In the deep learning architecture, multi-layer learning is performed at different abstract levels according to a machine learning algorithm. As a deep learning architecture, the CNN is a feed-forward (feed-forward) artificial neural network. Neurons in the feed-forward artificial neural network may respond to an image input into the neural network. The convolutional neural network includes a feature extractor constituted by a convolutional layer and a pooling layer. The feature extractor may be considered as a filter. A convolution process may be considered as using a trainable filter to perform convolution on an input image or a convolutional feature plane (feature map).

The convolutional layer is a neuron layer that is in the convolutional neural network and at which convolution processing is performed on an input signal. The convolutional layer may include a plurality of convolution operators. The convolution operator is also referred to as a kernel. In image processing, the convolution operator functions as a filter that extracts specific information from an input image matrix. The convolution operator may be a weight matrix essentially, and the weight matrix is usually predefined. In a process of performing a convolution operation on an image, the weight matrix is usually used to process pixels at a granularity of one pixel (or two pixels, depending on a value of a stride (stride)) in a horizontal direction on the input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows × columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract side information of the image, another weight matrix is used to extract a specific color of the image, and still another weight matrix is used to blur unnecessary noise in the image. Sizes of the plurality of weight matrices (rows × columns) are the same. Sizes of feature maps extracted from the plurality of weight matrices with the same size are also the same, and then the plurality of extracted feature maps with the same size are combined to form an output of the convolution operation. Weight values in these weight matrices need to be obtained through a large amount of training in actual application. Each weight matrix including weight values obtained through training may be used to extract information from an input image, so that the convolutional neural network performs correct prediction. When the convolutional neural network has a plurality of convolutional layers, a large quantity of general features are usually extracted at an initial convolutional layer. The general feature may also be referred to as a low-level feature. As a depth of the convolutional neural network increases, a feature extracted at a subsequent convolutional layer is more complex, for example, a high-level semantic feature. A feature with higher-level semantics is more applicable to a to-be-resolved problem.

A quantity of training parameters often needs to be reduced. Therefore, a pooling layer often needs to be periodically introduced after a convolutional layer. One convolutional layer may be followed by one pooling layer, or a plurality of convolutional layers may be followed by one or more pooling layers. During image processing, the pooling layer is only used to reduce a space size of the image. The pooling layer may include an average pooling operator and/or a maximum pooling operator, to perform sampling on an input image to obtain an image with a small size. The average pooling operator may be used to calculate pixel values in the image in a specific range, to generate an average value. The average value is used an average pooling result. The maximum pooling operator may be used to select a pixel with a maximum value in a specific range as a maximum pooling result. In addition, similar to that a size of a weight matrix at a convolutional layer needs to be related to a size of an image, an operator at the pooling layer also needs to be related to a size of an image. A size of an image output after processing at the pooling layer may be less than a size of an image input to the pooling layer. Each pixel in the image output from the pooling layer represents an average value or a maximum value of a corresponding sub-area of the image input to the pooling layer.

After processing performed at the convolutional layer/pooling layer, the convolutional neural network is not ready to output required output information. As described above, at the convolutional layer/pooling layer, only a feature is extracted, and parameters resulting from the input image are reduced. However, to generate final output information (required class information or other related information), the convolutional neural network needs to use the neural network layer to generate an output of one required class or a group of required classes. Therefore, the convolutional neural network layer may include a plurality of hidden layers. Parameters included in the plurality of hidden layers may be obtained through pre-training based on related training data of a specific task type. For example, the task type may include image recognition, image classification, and super-resolution image reconstruction.

Optionally, at the neural network layer, the plurality of hidden layers are followed by the output layer of the entire convolutional neural network. The output layer has a loss function similar to a categorical cross entropy, and the loss function is specifically used to calculate a prediction error. Once forward propagation of the entire convolutional neural network is completed, back propagation is started to update a weight value and a deviation of each layer mentioned above, to reduce a loss of the convolutional neural network and an error between a result output by the convolutional neural network by using the output layer and an ideal result.

4. Recurrent neural network

A recurrent neural network (recurrent neural network, RNN) is used to process sequence data. In a conventional neural network model, layers from an input layer to a hidden layer and to an output layer are fully connected, and nodes at each layer are not connected. Such a common neural network resolves many problems, but is still incapable of resolving many other problems. For example, to predict a next word in a sentence, a previous word usually needs to be used, because the previous word and the next word in the sentence are not independent. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are connected, and an input of the hidden layer includes an output of the input layer, and also includes an output of the hidden layer at a previous moment. Theoretically, the RNN can process sequence data of any length. Training for the RNN is the same as training for a conventional CNN or DNN. An error back propagation algorithm is also used, but there is a difference: If the RNN is expanded, a parameter such as W of the RNN is shared. This is different from the conventional neural network described in the foregoing example. In addition, during use of a gradient descent algorithm, an output in each step depends on a network in a current step, and also on a network status in several previous steps. The learning algorithm is referred to as a back propagation through time (back propagation through time, BPTT) algorithm.

Why is the recurrent neural network still required when the convolutional neural network is available? A reason is simple. In the convolutional neural network, there is a premise that elements are independent of each other, and input and output are also independent, such as a cat and a dog. However, in the real world, a plurality of elements are interconnected. For example, stocks change over time. For another example, a person says: "I love traveling, and my favorite place is Yunnan. I will go there when I have a chance." Herein, people should know that the person will go to "Yunnan". Because people perform inference from the context. However, how do machines do that? Then, the RNN emerges. The RNN is intended to make the machine capable of memorizing like a human. Therefore, an output of the RNN needs to depend on current input information and historical memorized information.

5. Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

6. Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

7. Generative adversarial network

A generative adversarial network (generative adversarial network, GAN) is a deep learning model. The model includes at least two modules: one module is a generative model (Generative Model), and the other module is a discriminative model (Discriminative Model). The two modules learn from each other through game learning, so as to generate a better output. Both the generative model and the discriminative model may be neural networks, and may specifically be deep neural networks or convolutional neural networks. A basic principle of the GAN is as follows: A GAN for generating a picture is used as an example, and it is assumed that there are two networks: G (Generator) and D (Discriminator). G is a network for generating a picture. G receives random noise z, and generates the picture by using the noise, where the picture is denoted as G(z). D is a discriminator network used to determine whether a picture is "real". An input parameter of D is x, x represents a picture, and an output D(x) represents a probability that x is a real picture. If a value of D(x) is 1, it indicates that the picture is 130% real. If the value of D(x) is 0, it indicates that the picture cannot be real. In a process of training the generative adversarial network, an objective of the generative network G is to generate a picture that is as real as possible to deceive the discriminative network D, and an objective of the discriminative network D is to distinguish between the picture generated by G and a real picture as much as possible. In this way, a dynamic "gaming" process, to be specific, "adversary" in the "generative adversarial network", exists between G and D. A final gaming result is that in an ideal state, G may generate an image G(z) that is to be difficultly distinguished from a real image, and it is difficult for D to determine whether the image generated by G is real, to be specific, D(G(z))=0.5. In this way, an excellent generative model G is obtained, and can be used to generate a picture.

Embodiments of this application relate to scalable video coding. For ease of understanding, the following first explains and describes related nouns or terms.

Layered video coding, also referred to as scalable video encoding and decoding, is an extended encoding standard of current video coding standards (generally, an extended standard scalable video coding (scalable video coding, SVC) of advanced video coding (advanced video coding, AVC) (H.264) or an extended standard scalable high efficiency video coding (scalable high efficiency video coding, SHVC) of high efficiency video coding (high efficiency video coding, HEVC) (H.265)). The scalable video coding is mainly used to resolve the packet loss and delay jitter problems caused by real-time network bandwidth changes in real-time video transmission.

A basic structure in the scalable video coding may be referred to as layers. In the scalable video coding technology, space domain layering (resolution layering) is performed on original image blocks, so that bitstreams of different resolution layers can be obtained. Resolution may be a size of an image block in a unit of pixel. Resolution at a lower layer is low, and resolution at a higher layer is not less than the resolution at the lower layer. Alternatively, time domain layering (frame rate layering) is performed on original image blocks, so that bitstreams of different frame rate grades can be obtained. A frame rate may be a quantity of image frames included in a video in a unit time. A frame rate at a lower layer is low, and a frame rate at a higher layer is not less than the frame rate at the lower layer. Alternatively, quality domain layering is performed on original image blocks, so that bitstreams of different encoding quality grades can be obtained. Encoding quality may be video quality. An image distortion degree at a lower layer is high, and an image distortion degree at a higher layer is not greater than the image distortion degree at the lower layer.

Usually, a layer referred to as a base layer is a bottom layer in the scalable video coding. In the space domain layering, a base layer image block is encoded at lowest resolution. In the time domain layering, a base layer image block is encoded at a lowest frame rate. In the quality domain layering, a base layer image block is encoded at a highest QP or a lowest bit rate. That is, the base layer is the lowest quality layer in the scalable video coding. Layers referred to as enhancement layers are layers above the base layer in the scalable video coding, and may be divided into a plurality of enhancement layers from bottom to top. A lowest enhancement layer encodes encoding information obtained by the base layer, to obtain a combined bitstream, and has higher encoding resolution, a higher frame rate, or a higher bit rate than the base layer. A higher enhancement layer may encode encoding information of a lower enhancement layer, to obtain image blocks of higher quality.

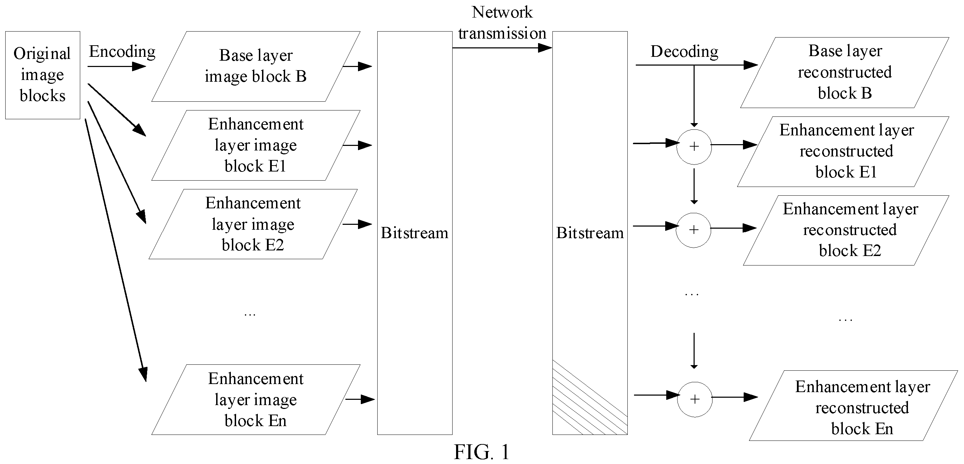

For example, FIG. 1 is an example diagram of layers of scalable video coding according to this application. As shown in FIG. 1, after original image blocks are sent to a scalable encoder, the original image blocks may be layered into a base layer image block B and enhancement layer image blocks (E1 to En, n ≥ 1) according to different encoding configurations, and then bitstreams including a base layer bitstream and enhancement layer bitstreams are obtained through encoding. The base layer bitstream is generally a bitstream obtained from the image blocks at minimum resolution, a minimum frame rate, or a minimum encoding quality parameter. The enhancement layer bitstream is a bitstream obtained by encoding the image blocks based on the base layer at high resolution, a high frame rate, or a high encoding quality parameter together. As a quantity of enhancement layers increases, space domain layers, time domain layers, or quality layers for encoding also increase. When the encoder transmits the bitstreams to a decoder, transmission of the base layer bitstream is ensured first. When the network has a margin, the bitstreams at higher layers are transmitted gradually. The decoder first receives and decodes the base layer bitstream, then decodes the received enhancement layer bitstreams in an ascending order of space domain, time domain, or quality layer by layer from a lower layer to a higher layer, and then superposes decoded information of a higher layer on a reconstructed block of a lower layer, to obtain a reconstructed block of higher resolution, a higher frame rate, or higher quality.

As described above, each image of a video sequence is usually partitioned into a set of non-overlapping blocks, and encoding is usually performed at a block level. In other words, the encoder usually processes a video at a block (image block) level, that is, encodes the video, for example, generates prediction blocks through space (intra-frame) prediction and time (inter-frame) prediction; subtracts the prediction blocks from image blocks (blocks currently being processed/to be processed) to obtain residual blocks; and transforms the residual blocks and quantizes the residual blocks in a transform domain, to reduce an amount of data to be transmitted (compressed). The encoder further needs to perform inverse quantization and inverse transformation to obtain reconstructed residual blocks, and then adds pixel values of the reconstructed residual blocks to pixel values of the prediction blocks to obtain reconstructed blocks. Reconstructed blocks at the base layer are reconstructed blocks obtained by performing the foregoing operations on the base layer image block obtained by layering the original image blocks.

A region in the following may be a largest coding unit (largest coding unit, LCU) in an entire image, an image block obtained by dividing the entire image, a region of interest (region of interest, ROI) in the entire image (that is, a specified image region to be processed in the image), or a slice image (Slice) in an image.

With the excellent performance of deep learning in various fields, researchers propose a deep learning-based end-to-end image encoding solution. In combination with this solution, a related technology provides a layered image encoding framework, where a base layer uses a codec based on versatile video coding (versatile video coding, VVC), and an enhancement layer uses a codec based on artificial intelligence (artificial intelligence, AI). This solution is described as follows:

Encoder side:

For a base layer, a VVC encoder encodes an input image x to obtain a bitstream, and a VVC decoder decodes the bitstream to obtain a reconstructed image xc of the base layer.

For an enhancement layer, x and xc are input into an encoding network (Encoder) to obtain a residual feature map (y) of the enhancement layer. On a branch, y is input into a side information extraction network to obtain side information (z) of y, z is quantized to obtain quantized side information ($\hat{z}$), entropy encoding is performed on $\hat{z}$, and encoded data is written into a bitstream. Then, entropy decoding is performed on the bitstream to obtain decoded side information ($\hat{z}$), and inverse quantization is performed on $\hat{z}$ to obtain reconstructed side information ($\tilde{z}$). $\tilde{z}$ is inputted into a probability estimation network to obtain probability distributions of y. On the other branch, y is quantized to obtain a quantized residual feature map (y) of the enhancement layer, entropy encoding is performed on y based on the probability distributions, and encoded data is written into a bitstream. Then, entropy decoding is performed on the bitstream based on the probability distributions to obtain a decoded residual feature map y, and inverse quantization is performed on y to obtain a reconstructed residual feature map ($\tilde{y}$). xc and $\tilde{y}$ are input to a decoding network (Decoder) to obtain a reconstructed image yc of the enhancement layer.

Decoder side:

For a base layer, a VVC decoder parses a bitstream to obtain a reconstructed image xc of the base layer.

For an enhancement layer, the bitstream is parsed to obtain decoded side information ($\hat{z}$), and inverse quantization is performed on $\hat{z}$ to obtain reconstructed side information ($\tilde{z}$). $\tilde{z}$ is inputted into a probability estimation network to obtain probability distributions of $\hat{y}$. Entropy decoding is performed on the bitstream based on the probability distributions to obtain a decoded residual feature map y, and inverse quantization is performed on y to obtain a reconstructed residual feature map ($\tilde{y}$). xc and $\tilde{y}$ are input to a decoding network (Decoder) to obtain a reconstructed image yc of the enhancement layer.

In the foregoing solution, an AI image encoding and decoding method is used at the enhancement layer, and is better than a conventional image encoding solution in terms of obj ective quality measurement such as an MS-structural similarity (structural similarity, SSIM) and a peak signal-to-noise ratio (peak signal-to-noise ratio, PSNR). However, in the foregoing solution, network complexity of AI image encoding and decoding is high, and there is a high computing power requirement. As a result, encoding and decoding efficiency of the enhancement layer is low.

Therefore, an embodiment of this application provides a method for encoding and decoding a region enhancement layer, to improve encoding and decoding efficiency of an enhancement layer. The following describes a system and/or a scenario to which the solutions in embodiments of this application are applicable.

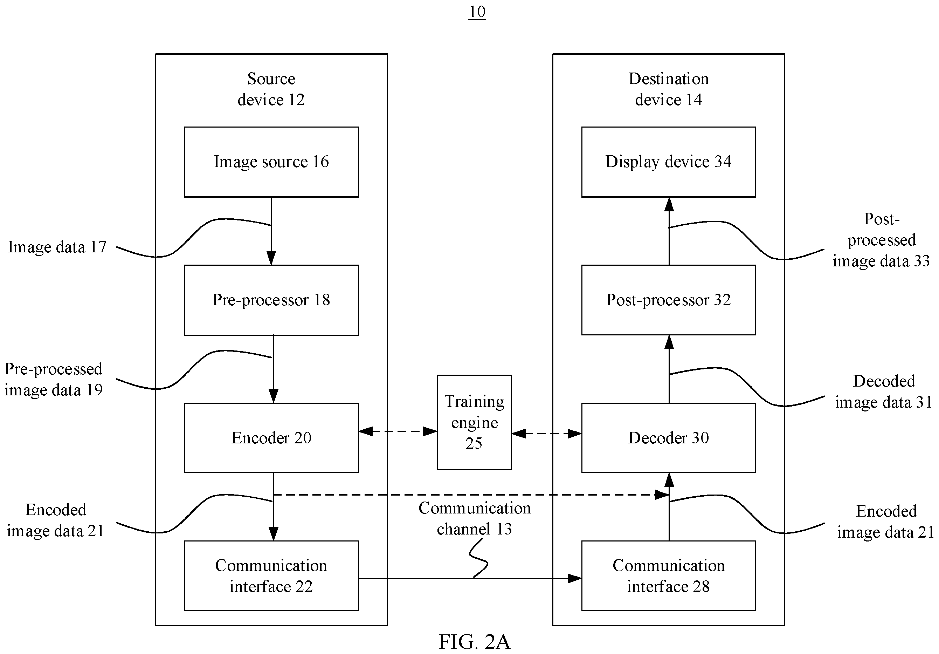

FIG. 2A is a block diagram of an example of a coding system 10. A video encoder 20 (or referred to as an encoder 20 for short) and a video decoder 30 (or referred to as a decoder 30 for short) in the coding system 10 may be configured to perform various example solutions described in embodiments of this application.

As shown in FIG. 2A, the coding system 10 includes a source device 12. The source device 12 is configured to provide encoded image data 21, for example, an encoded image, for a destination device 14 for decoding the encoded image data 21.

The source device 12 includes the encoder 20, and may additionally, that is, optionally, include an image source 16, a pre-processor (or pre-processing unit) 18, for example, an image pre-processor, and a communication interface (or a communication unit) 22.

The image source 16 may include or be any kind of image capturing device, for example a camera for capturing a real-world image, and/or any type of an image generating device, for example a computer-graphics processing unit for generating a computer animated image, or any type of other device for obtaining and/or providing a real-world image, a computer generated image (for example, a screen content, a virtual reality (virtual reality, VR) image) and/or any combination thereof (for example, an augmented reality (augmented reality, AR) image). The image source may be any type of memory or storage storing any of the aforementioned images.

In order to distinguish processing performed by the pre-processor (or the pre-processing unit) 18, the image (or image data) 17 may also be referred to as an original image (or an original image data) 17.

The pre-processor 18 is configured to receive the (original) image data 17 and to perform pre-processing on the image data 17 to obtain a pre-processed image (or pre-processed image data) 19. Pre-processing performed by the pre-processor 18 may, for example, include trimming, color format conversion (for example, from RGB to YCbCr), color correction, or denoising. It may be understood that the pre-processing unit 18 may be an optional component.

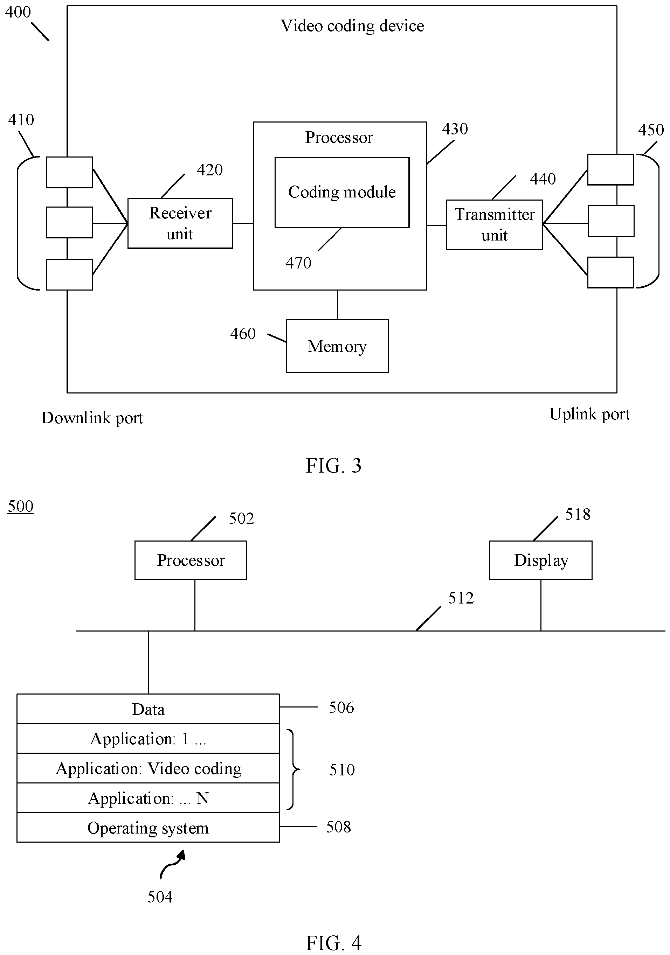

The video encoder (or encoder) 20 is configured to receive the pre-processed image data 19 and provide encoded image data 21 (further details are described below, for example, based on FIG. 3).

A communication interface 22 of the source device 12 may be configured to receive the encoded image data 21 and to transmit the encoded image data 21 (or any further processed version thereof) over communication channel 13 to another device, for example, the destination device 14 or any other device, for storage or direct reconstruction.

The destination device 14 includes a decoder 30, and may additionally, that is, optionally, include a communication interface (or communication unit) 28, a post-processor (or post-processing unit) 32, and a display device 34.

The communication interface 28 of the destination device 14 is configured to receive the encoded image data 21 (or any further processed version thereof), for example, directly from the source device 12 or from any other source device, for example, a storage device, for example, an encoded image data storage device, and provide the encoded image data 21 for the decoder 30.

The communication interface 22 and the communication interface 28 may be configured to transmit or receive the encoded image data (or encoded data) 21 over a direct communication link between the source device 12 and the destination device 14, for example, a direct wired or wireless connection, or via any kind of network, for example, a wired or wireless network or any combination thereof, or any kind of private and public network, or any kind of combination thereof.

The communication interface 22 may be, for example, configured to package the encoded image data 21 into an appropriate format, for example, packets, and/or process the encoded image data using any kind of transmission encoding or processing for transmission over a communication link or communication network.

The communication interface 28, forming the counterpart of the communication interface 22, may be, for example, configured to receive the transmission data and process the transmission data using any type of corresponding transmission decoding or processing and/or de-packaging to obtain the encoded image data 21.

Both the communication interface 22 and the communication interface 28 may be configured as unidirectional communication interfaces as indicated by the arrow for the communication channel 13 in FIG. 2A pointing from the source device 12 to the destination device 14, or bi-directional communication interfaces, and may be configured, for example, to send and receive messages, for example, to set up a connection, to acknowledge and exchange any other information related to the communication link and/or data transmission, for example, encoded image data transmission.

The video decoder (or decoder) 30 is configured to receive the encoded image data 21 and provide decoded image data (or decoded image data) 31 (further details will be described below, for example, based on FIG. 4).

The post-processor 32 is configured to post-process the decoded image data 31 (also referred to as reconstructed image data), for example, a decoded image, to obtain post-processed image data 33, for example, a post-processed image. The post-processing performed by the post-processing unit 32 may include, for example, color format conversion (for example, from YCbCr to RGB), color correction, trimming, or re-sampling, or any other processing, for example, for preparing the decoded image data 31 for display, for example, by the display device 34.

The display device 34 is configured to receive the post-processed image data 33 for displaying the image, for example, to a user or viewer. The display device 34 may be or include any type of display for representing the reconstructed image, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS), a digital light processor (digital light processor, DLP), or any type of other display.

The coding system 10 further includes a training engine 25. The training engine 25 is configured to train the encoder 20 or the decoder 30, and in particular, a neural network (described in detail below) used in the encoder 20 or the decoder 30.

In embodiments of this application, the training data may be stored in a database (not shown), and the training engine 25 performs training based on the training data to obtain the neural network. It should be noted that a source of the training data is not limited in embodiments of this application. For example, the training data may be obtained from a cloud or another place to perform model training.

Although FIG. 2A shows that the source device 12 and the destination device 14 are independent devices, the device embodiment may also include both the source device 12 and the destination device 14 or include functions of both the source device 12 and the destination device 14, that is, include both the source device 12 or a corresponding function and the destination device 14 or a corresponding function. In such embodiments, the source device 12 or corresponding function and the destination device 14 or corresponding function may be implemented using the same hardware and/or software or by separate hardware and/or software or any combination thereof.

According to the description, it is clear for a person skilled in the art that the existence and (accurate) division of different units or functions in the source device 12 and/or the destination device 14 shown in FIG. 2A may vary depending on actual devices and applications.

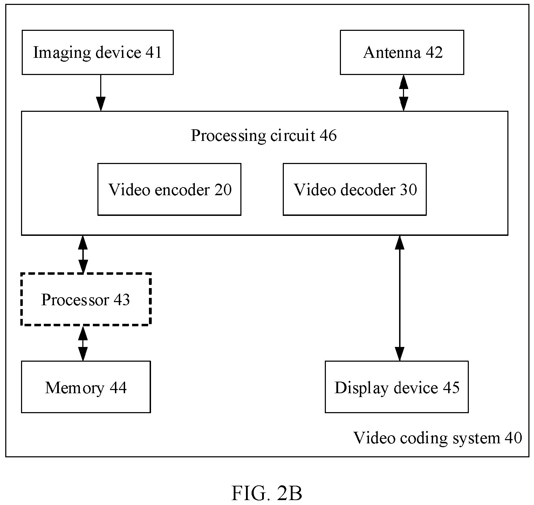

The encoder 20 (for example, the video encoder 20) or the decoder 30 (for example, the video decoder 30) or both the encoder 20 and the decoder 30 may be implemented via a processing circuit as shown in FIG. 2B, such as one or more microprocessors, digital signal processors (digital signal processors, DSPs), application-specific integrated circuits (application-specific integrated circuits, ASICs), field-programmable gate arrays (field-programmable gate arrays, FPGAs), discrete logic, hardware, video encoding dedicated processor or any combinations thereof. The encoder 20 and the decoder 30 may be separately implemented by using the processing circuit 46. The processing circuit 46 may be configured to perform the various operations as discussed later. If the techniques are implemented partially in software, a device may store instructions for the software in a suitable, non-transitory computer-readable storage medium and may execute the instructions in hardware using one or more processors to perform the techniques of this application. Either of the encoder 20 and the decoder 30 may be integrated as part of a combined encoder/decoder (encoder/decoder, CODEC) in a single device, for example, as shown in FIG. 2B.

The source device 12 and the destination device 14 may include any of a wide range of devices, including any type of handheld or stationary devices, for example, notebook or laptop computers, smart phones, tablets or tablet computers, cameras, desktop computers, set-top boxes, televisions, display devices, digital media players, video gaming consoles, video streaming devices (such as content services servers or content delivery servers), or the like and may use no or any type of operating system. In some cases, the source device 12 and the destination device 14 may be equipped with components for wireless communication. Therefore, the source device 12 and the destination device 14 may be wireless communication devices.

In some cases, the coding system 10 illustrated in FIG. 2A is merely an example and the techniques of this application may be applicable to video coding devices (for example, video encoding or video decoding) that do not necessarily include any data communication between the encoding device and the decoding device. In other examples, data is retrieved from a local memory, send over a network, or the like. A video encoding device may encode data and store encoded data into the memory, and/or a video decoding device may retrieve data from the memory and decode the data. In some examples, encoding and decoding are performed by devices that do not communicate with each other, but simply encode data into a memory and/or retrieve data from the memory and decode the data.

FIG. 2B is an example diagram of a video coding system 40. The video coding system 40 may include an imaging device 41, the video encoder 20, the video decoder 30 (and/or a video encoder/decoder implemented by the processing circuit 46), an antenna 42, one or more processors 43, one or more memories 44, and/or a display device 45.

As shown in FIG. 2B, the imaging device 41, the antenna 42, the processing circuit 46, the video encoder 20, the video decoder 30, the processor 43, the memory 44, and/or the display device 45 can communicate with each other. The video coding system 40 may include only the video encoder 20 or only the video decoder 30 in different examples.

In some examples, the antenna 42 may be configured to transmit or receive an encoded bitstream of video data. Further, in some examples, the display device 45 may be configured to present the video data. The processing circuit 46 may include application-specific integrated circuit (application-specific integrated circuit, ASIC) logic, a graphics processing unit, a general-purpose processor, or the like. The video coding system 40 may also include the optional processor 43. The optional processor 43 may similarly include application-specific integrated circuit (application-specific integrated circuit, ASIC) logic, a graphics processing unit, a general-purpose processor, or the like. In addition, the memory 44 may be a memory of any type, for example, a volatile memory (for example, a static random access memory (static random access memory, SRAM) or a dynamic random access memory (dynamic random access memory, DRAM)) or a nonvolatile memory (for example, a flash memory). In a non-limitative example, the memory 44 may be implemented by a cache memory. In other examples, the processing circuit 46 may include a memory (for example, a cache) for implementing an image buffer.

In some examples, the video encoder 20 implemented by using the logic circuit may include an image buffer (which is implemented by, for example, the processing circuit 46 or the memory 44) and a graphics processing unit (which is implemented by, for example, the processing circuit 46). The graphics processing unit may be communicatively coupled to the image buffer. The graphics processing unit may include the video encoder 20 implemented by using the processing circuit 46. The logic circuit may be configured to perform various operations discussed in this specification.

In some examples, the video decoder 30 may be implemented by the processing circuit 46 in a similar manner, to implement various modules that are described with reference to the video decoder 30 in FIG. 4 and/or any other decoder system or subsystem described in this specification. In some examples, the video decoder 30 implemented by using the logic circuit may include an image buffer (which is implemented by the processing circuit 46 or the memory 44) and a graphics processing unit (which is implemented by, for example, the processing circuit 46). The graphics processing unit may be communicatively coupled to the image buffer. The graphics processing unit may include the video decoder 30 implemented by using the processing circuit 46.

In some examples, the antenna 42 may be configured to receive an encoded bitstream of video data. As described, the encoded bitstream may include data, an indicator, an index value, mode selection data, or the like related to video frame encoding described in this specification, for example, data related to encoding partitioning (for example, a transform coefficient or a quantized transform coefficient, an optional indicator (as described), and/or data defining the encoding partitioning). The video coding system 40 may further include the video decoder 30 that is coupled to the antenna 42 and that is configured to decode the encoded bitstream. The display device 45 is configured to present a video frame.

It should be understood that in embodiments of this application, for the example described with reference to the video encoder 20, the video decoder 30 may be configured to perform a reverse process. With regard to a signaling syntax element, the video decoder 30 may be configured to receive and parse such a syntax element and correspondingly decode related video data. In some examples, the video encoder 20 may entropy encode the syntax element into an encoded video bitstream. In such examples, the video decoder 30 may parse such syntax element and decode the associated video data accordingly.

For convenience of description, embodiments of the present invention are described herein, for example, by reference to high-efficiency video coding (High-Efficiency Video Coding, HEVC) or to the reference software of versatile video coding (Versatile Video Coding, VVC), the next generation video coding standard developed by the joint collaboration team on video coding (Joint Collaboration Team on Video Coding, JCT-VC) of ITU-T video coding experts group (Video Coding Experts Group, VCEG) and ISO/IEC motion picture experts group (Motion Picture Experts Group, MPEG). A person of ordinary skill in the art will understand that embodiments of the present invention are not limited to HEVC or VVC.

FIG. 3 is a diagram of a video coding device 400 according to an embodiment of the present invention. The video coding device 400 is suitable for implementing the disclosed embodiments described in this specification. In an embodiment, the video coding device 400 may be a decoder, for example, the video decoder 30 in FIG. 2A or an encoder, for example, the video encoder 20 in FIG. 2A.

The video coding device 400 includes ingress ports 410 (or input ports 410) and receiver units (receiver units, Rx) 420 for receiving data; a processor, a logic unit, or a central processing unit (central processing unit, CPU) 430 for processing the data, for example, the processor 430 may be a neural network processing unit 430; transmitter units (transmitter units, Tx) 440 and egress ports 450 (or output ports 450) for transmitting the data; and a memory 460 for storing the data. The video coding device 400 may also include optical-to-electrical (optical-to-electrical, OE) components and electrical-to-optical (electrical-to-optical, EO) components coupled to the ingress ports 410, the receiver units 420, the transmitter units 440, and the egress ports 450 for egress or ingress of optical or electrical signals.

The processor 430 is implemented by hardware and software. The processor 430 may be implemented as one or more processor chips, cores (for example, a multi-core processor), FPGAs, ASICs, and DSPs. The processor 430 is in communication with the ingress ports 410, the receiver units 420, the transmitter units 440, the egress ports 450, and the memory 460. The processor 430 includes a coding module 470 (for example, a neural network NN-based coding module 470). The coding module 470 implements the disclosed embodiments described above. For example, the coding module 470 implements, processes, prepares, or provides the various encoding operations. Therefore, the coding module 470 provides a substantial improvement to functions of the video coding device 400 and affects switching of the video coding device 400 to a different state. Alternatively, the coding module 470 is implemented as instructions stored in the memory 460 and executed by the processor 430.

The memory 460 may include one or more disks, tape drives, and solid-state drives and may be used as an overflow data storage device, to store programs when such programs are selected for execution, and to store instructions and data that are read during program execution. The memory 460 may be volatile and/or non-volatile, and may be a read-only memory (read-only memory, ROM), a random access memory (random access memory, RAM), a ternary content addressable memory (ternary content-addressable memory, TCAM), and/or a static random-access memory (static random-access memory, SRAM).

FIG. 4 is a simplified block diagram of an apparatus 500 according to an embodiment. The apparatus 500 may be used as either or both of the source device 12 and the destination device 14 in FIG. 2A.

A processor 502 in the apparatus 500 can be a central processing unit. Alternatively, the processor 502 can be any other type of device, or multiple devices, capable of manipulating or processing information now-existing or hereafter developed. Although the disclosed implementations can be practiced with a single processor as shown, for example, the processor 502, advantages in speed and efficiency can be achieved using more than one processor.

In an implementation, a memory 504 in the apparatus 500 may be a read only memory (ROM) device or a random access memory (RAM) device. Any other suitable class of storage device can be used as the memory 504. The memory 504 can include code and data 506 that is accessed by the processor 502 through a bus 512. The memory 504 may further include an operating system 508 and an application program 510. The application program 510 includes at least one program that permits the processor 502 to perform the methods described in the specification. For example, the application program 510 may include applications 1 to N, and further include a video coding application that performs the methods described in this specification.

The apparatus 500 may also include one or more output devices, such as a display 518. In one example, the display 518 may be a touch sensitive display that combines a display with a touch sensitive element that is operable to sense touch inputs. The display 518 may be coupled to the processor 502 through the bus 512.

Although the bus 512 of the apparatus 500 is described as a single bus in this specification, the bus 512 may include a plurality of buses. Further, a secondary storage may be directly coupled to the other components of the apparatus 500 or may be accessed via a network and may include a single integrated unit, for example, a memory card or a plurality of units such as a plurality of memory cards. Therefore, the apparatus 500 may have a wide variety of configurations.

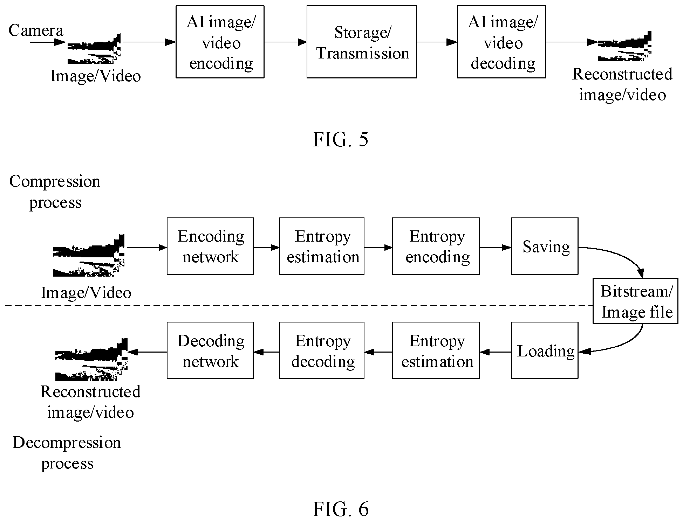

FIG. 5 is a diagram of an application scenario according to an embodiment of this application. As shown in FIG. 5, the application scenario may be a service related to image/video capturing, storage, or transmission in a terminal, a cloud server, or video surveillance, for example, photographing/video recording by a terminal, an album, a cloud album, or video surveillance.

Encoder side: A camera (Camera) captures an image/video. An artificial intelligence (artificial intelligence, AI) image/video coding network obtains an image feature with low redundancy from feature extraction for an image/video, and then performs compression based on the image feature to obtain a bitstream/image file.

Decoder side: When the image/video needs to be output, an AI image/video decoding network decompresses the bitstream/image file to obtain an image feature, and then performs reverse feature extraction on the image feature to obtain a reconstructed image/video.

A storage/transmission module stores (for example, photographing by a terminal, video surveillance, or a cloud server) or transmits (for example, a cloud service or a live broadcast technology) the bitstream/image file obtained by compression for different services.

FIG. 6 is a diagram of an application scenario according to an embodiment of this application. As shown in FIG. 6, the application scenario may be a service related to image/video capturing, storage, or transmission in a terminal or video surveillance, for example, a terminal album, video surveillance, or live broadcast.

Encoder side: An encoding network converts an image/video into an image feature with a lower redundancy degree. The encoding network usually includes a non-linear transformation unit and has a non-linear feature. An entropy estimation network is responsible for calculating an encoding probability of each piece of data in the image feature. An entropy encoding network performs lossless encoding on the image feature based on a probability corresponding to each piece of data to obtain a bitstream/image file. This further reduces a data transmission amount in an image compression process.

Decoder side: An entropy decoding network performs lossless decoding on the bitstream/image file based on the probability corresponding to each piece of data to obtain a reconstructed image feature. A decoding network performs inverse transformation on the image feature output through entropy decoding, and parses the image feature into an image/video. Corresponding to the encoding network, the decoding network usually includes a non-linear transformation unit and has a non-linear feature. A storage module saves the bitstream/image file in a corresponding storage location of the terminal. A loading module loads the bitstream/image file from the corresponding storage location of the terminal, and inputs the bitstream/image file to the entropy decoding network.

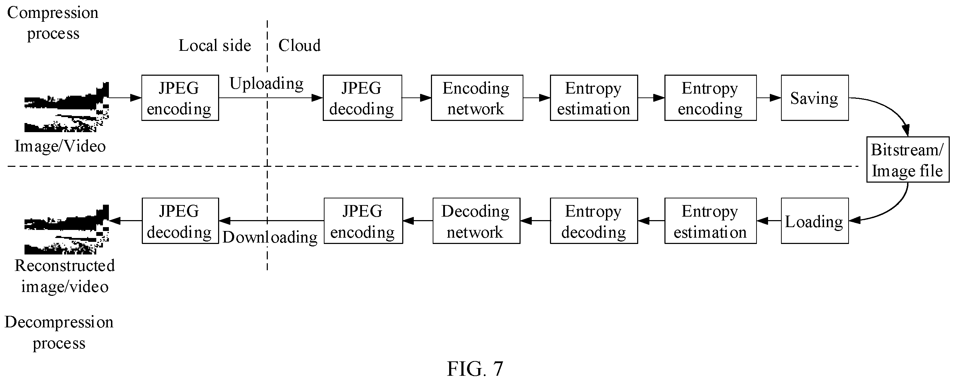

FIG. 7 is a diagram of an application scenario according to an embodiment of this application. As shown in FIG. 7, the application scenario may be a service related to image/video capturing, storage, or transmission in cloud or video surveillance, for example, a cloud album, video surveillance, or live broadcast.

Encoder side: The local side obtains an image/video, encodes the image/video (JPEG) to obtain a compressed image/video, and then sends a compressed image/video to the cloud. The cloud performs JPEG decoding on the compressed image/video to obtain the image/video, and then compresses the image/video to obtain a bitstream/image file and stores the bitstream/image file.

Decoder side: When the local side needs to obtain the image/video from the cloud, the cloud decompresses the bitstream/image file to obtain the image/video, performs JPEG encoding on the image/video to obtain a compressed image/video, and sends the compressed image/video to the local side. The local side performs JPEG decoding on the compressed image/video to obtain the image/video. For a structure of the cloud and a usage of each module, refer to the structure and the usage of each module in FIG. 7. Details are not described herein in embodiments of this application.

Based on the foregoing encoding/decoding network and application scenario, an embodiment of this application provides an image encoding/decoding method, to implement efficient non-linear transformation processing and improve rate-distortion performance of an image/video compression algorithm.

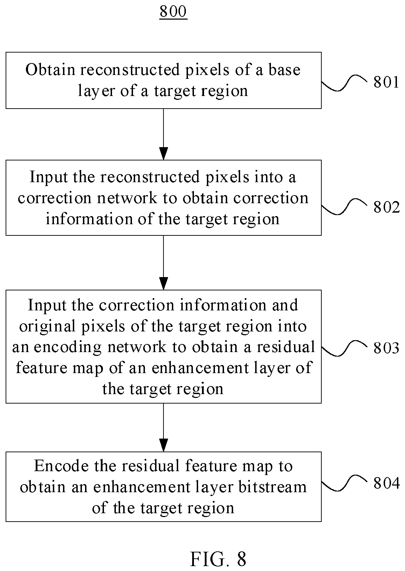

FIG. 8 is a flowchart of a process 800 of a method for encoding a region enhancement layer according to an embodiment of this application. The process 800 may be performed by the video encoder 20. The process 800 is described as a series of steps or operations. It should be understood that the steps or operations of the process 800 may be performed in various sequences and/or simultaneously, and are not limited to an execution sequence shown in FIG. 8. Assuming that a video data stream with a plurality of image frames is using the video encoder 20, the process 800 including the following steps is performed to encode the region enhancement layer. The process 800 may include the following steps.

Step 801: Obtain reconstructed pixels of a base layer of a target region.

Usually, each image of a video sequence may be partitioned into a set of non-overlapping image blocks, and then encoding is performed at an image block level. In other words, the encoder usually processes a video at a block (image block) level, that is, encodes the video, for example, generates prediction blocks through space (intra-frame) prediction and time (inter-frame) prediction; subtracts the prediction blocks from image blocks (blocks currently being processed/to be processed) to obtain residual blocks; and transforms the residual blocks and quantizes the residual blocks in transform domain, to reduce an amount of data to be transmitted (compressed). The encoder further needs to perform inverse quantization and inverse transformation to obtain reconstructed residual blocks, and then adds pixel values of the reconstructed residual blocks to pixel values of the prediction blocks to obtain reconstructed blocks. In this embodiment of this application, a region included in an image frame may be a largest coding unit (largest coding unit, LCU) in an entire image, an image block obtained by dividing the entire image, a region of interest (region of interest, ROI) in the entire image (that is, a specified image region to be processed in the image), or the like. It should be understood that, in addition to the foregoing several cases, the region may alternatively be a partial image described in another manner. This is not specifically limited herein.

On this basis, the target region is intended to represent a location of an image block that is focused on and processed in one encoding process in the solution in this embodiment of this application. A shape of the target region may be a regular rectangle or square, or may be an irregular shape. This is not specifically limited herein.

As described above, in the encoding process, an initially obtained image block may be referred to as an original block, and pixels included in the image block may be referred to as original pixels. A reconstructed image block may be referred to as a reconstructed block, and pixels included in the reconstructed image block may be referred to as reconstructed pixels. However, in scalable video coding, although different layers have different resolutions, frame rates, or quality, encoding processes are roughly similar, and in particular, each layer includes an initial image block and a reconstructed image block.

Therefore, in this embodiment of this application, for the target region, there may be the concepts as follows: At a base layer, pixels included in an initially obtained region are referred to as original pixels of a base layer of the region, and pixels included in a reconstructed region are referred to as reconstructed pixels of a base layer of the region.

At an enhancement layer, pixels included in an initially obtained region are referred to as original pixels of an enhancement layer of the region, and pixels included in a reconstructed region are referred to as reconstructed pixels of an enhancement layer of the region.

It should be noted that the concept of a quantity of pixels is not mentioned in the foregoing description of the original pixels or the reconstructed pixels. However, it should be understood that the region usually includes a plurality of pixels. This is not specifically limited in embodiments of this application.

In this embodiment of this application, the obtaining reconstructed pixels of a base layer of a target region may include: encoding an image to which the target region belongs, to obtain a base layer bitstream of the image; decoding the base layer bitstream to obtain a reconstructed image of a base layer of the image; and determining, based on the reconstructed image, at least one region to be enhanced, where the target region is one of the at least one region.

For a base layer, an encoder side encodes an original image to obtain a base layer bitstream, and then the base layer bitstream is decoded to obtain a reconstructed image of the base layer. For example, a VVC encoder encodes the original image to obtain the base layer bitstream, and a VVC decoder decodes the base layer bitstream to obtain the reconstructed image of the base layer. It should be understood that another encoder, an HEVC codec, or an AVC codec may alternatively be used for the base layer. This is not specifically limited in embodiments of this application.

After the reconstructed image of the base layer is obtained, the reconstructed image may be divided to obtain a plurality of regions. For the plurality of regions, refer to related descriptions of the foregoing region, for example, a plurality of LCUs, a plurality of image blocks, and a plurality of ROIs. It should be noted that the region may be a partial image described in a plurality of manners. Correspondingly, a plurality of manners may be used as the division manner of obtaining a plurality of regions. This is not specifically limited in embodiments of this application.

In the foregoing plurality of regions, based on attributes or features of the image, not all regions need to be enhanced, and only encoding and decoding of the base layer need to be performed on one or more regions to meet an image quality requirement. Therefore, in this embodiment of this application, the target region is a region to be enhanced. In subsequent encoding of the enhancement layer, encoding and decoding of the enhancement layer may be performed only on the target region. In this way, there is no need to enhance the entire image, and encoding and decoding efficiency of the image may be improved.

At least one region may be determined as the target region in the plurality of regions. The at least one region meets a condition: A variance of the region is greater than a first threshold. For example, if a variance of a region is greater than a threshold t1, and t1 > 0, it may be considered that texture of the region is complex, and therefore enhancement processing needs to be performed to improve image quality; or a proportion of pixels whose gradients are greater than a second threshold and that are in total pixels in the region is greater than a third threshold. For example, if a proportion of pixels whose gradients are greater than a threshold a and that are in total pixels in a region is greater than a threshold t2, a > 0, and 0 < t2 < 1, it may also be considered that texture of the region is complex, and therefore enhancement processing needs to be performed to improve image quality.

After the foregoing process, the encoder side may use any one of the at least one region as the current target region, and extract, from the reconstructed image of the base layer, pixels at a location corresponding to the target region, namely, reconstructed pixels of the base layer of the target region.

Step 802: Input the reconstructed pixels into a correction network to obtain correction information of the target region.

An input into the correction network is the reconstructed pixels of the base layer of the target region, and an output is the correction information corresponding to the target region. The correction network functions to remove noise signals not beneficial to encoding of an AI enhancement layer. The correction network may be formed by a convolutional layer (conv) and an activation layer (ReLU). Whether the correction network includes the activation layer (generalized divisive normalization, GDN) is not limited, and whether there is another activation function is not limited either. In this embodiment of this application, a quantity of convolutional layers is not limited, and a size of a convolution kernel is not limited either. For example, the convolution kernel may be $3 \times 3$, $5 \times 5$, or $7 \times 7$.

In a possible implementation, the reconstructed pixels of the base layer of the target region are input into the correction network to obtain at least one of a plurality of pixel values and a plurality of feature values of the target region, where the correction information may be the plurality of pixel values or the plurality of feature values.

In this embodiment of this application, the correction network may be implemented by using a neural network. For example, the correction network is constructed by using a neural network formed by interpolating and cascading four convolutional layers/deconvolutional layers and three activation layers. A size of a convolution kernel of each convolutional layer may be set to $3 \times 3$, a quantity of channels for outputting a feature map is set to M, and downsampling by a factor of 2 is performed on a width and a height of each convolutional layer. It should be understood that the foregoing example does not constitute a specific limitation. The size of the convolution kernel, the quantity of channels for the feature map, the downsampling factor, a quantity of downsampling times, a quantity of convolutional layers, and a quantity of activation layers may all be adjusted. This is not specifically limited in embodiments of this application.

After processing by the foregoing correction network, the plurality of pixel values and/or the plurality of feature values may be output. It should be understood that the input into the correction network is the reconstructed pixels, and the reconstructed pixels are within a range of the target region. Therefore, even if the plurality of pixel values and/or the plurality of feature values that are output are not in a one-to-one correspondence with pixels in the target region, it may be considered that the plurality of pixel values and/or the plurality of feature values are still within the range of the target region, that is, the plurality of pixel values and/or the plurality of feature values correspond to the target region. For example, the correction information may be an upsampling value of the reconstructed pixels of the base layer of the target region. Resolution of the reconstructed pixels of the base layer of the target region is the same as or different from resolution of reconstructed pixels of the enhancement layer of the target region. This is not specifically limited in embodiments of this application.

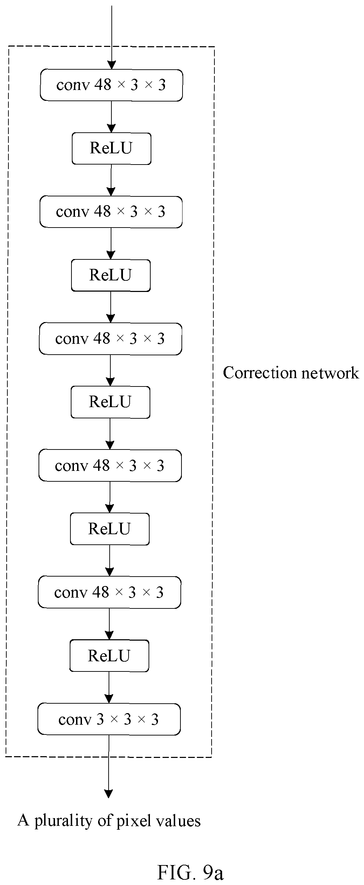

FIG. 9a is an example diagram of a correction network. As shown in FIG. 9a, the correction network includes six convolutional layers and five activation layers ReLU, and a size of a convolution kernel is $3 \times 3$. The reconstructed pixels of the base layer of the target region are input into the correction network, and a plurality of pixel values are output. The correction network can perform denoising on the reconstructed pixels to remove the noise signals not beneficial to encoding of the AI enhancement layer, and obtain the plurality of pixel values.

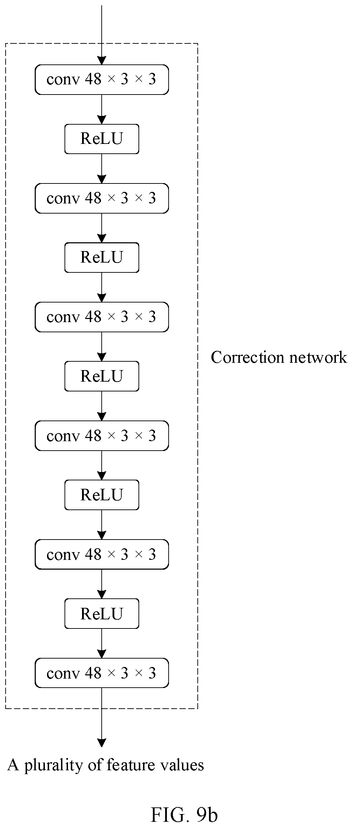

FIG. 9b is an example diagram of a correction network. As shown in FIG. 9b, the correction network includes six convolutional layers and five activation layers ReLU, and a size of a convolution kernel is $3 \times 3$. The reconstructed pixels of the base layer of the target region are input into the correction network, and a plurality of feature values are output.

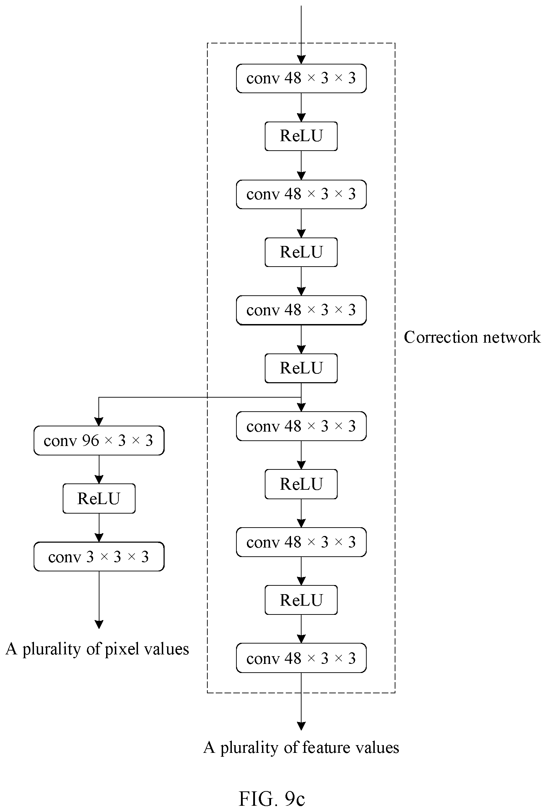

FIG. 9c is an example diagram of a correction network. As shown in FIG. 9c, the correction network includes eight convolutional layers and six activation layers ReLU, and a size of a convolution kernel is $3 \times 3$. The reconstructed pixels of the base layer of the target region are input into the correction network, and a plurality of pixel values and a plurality of feature values are output from different layers of the correction network.

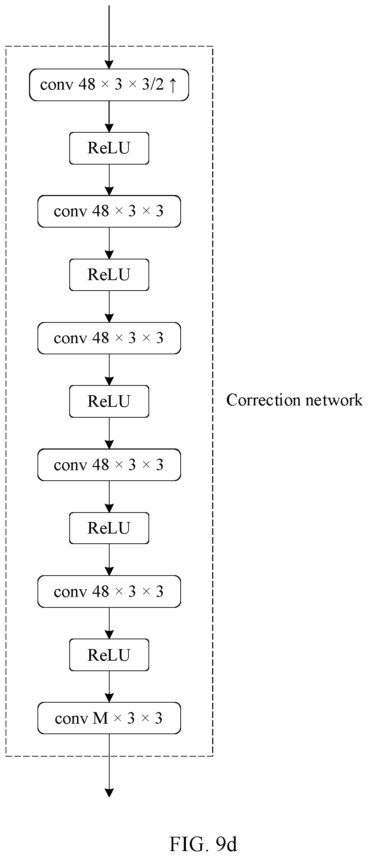

FIG. 9d is an example diagram of a correction network. As shown in FIG. 9d, the correction network includes five convolutional layers, one deconvolutional layer, and five activation layers ReLU, and a size of a convolution kernel is $3 \times 3$. A size of a convolution kernel of the deconvolutional layer of the correction network may be set to $3 \times 3$, a quantity of channels for outputting a feature map is set to 48 (or may be another value, which is not limited herein), and upsampling by a factor of 2 is performed on a width and a height of the deconvolutional layer. An output channel of a last convolutional layer is M. When M is 3, a plurality of pixel values are output. When M is 48, a plurality of feature values are output. In this case, resolution of the correction information is twice the resolution of the reconstructed pixels of the base layer.

It should be noted that, in addition to the foregoing four examples of the correction network, a correction network of another structure may alternatively be used in embodiments of this application. This is not specifically limited herein.

Step 803: Input the correction information and original pixels of the target region into an encoding network to obtain a residual feature map of the enhancement layer of the target region.

The encoder side may extract, from an original image, pixels at a location corresponding to the target region, namely, the original pixels of the target region.

As described above, the correction information may have two cases: one is the plurality of pixel values, and the other is the plurality of feature values. Correspondingly, the encoding network may also use two structures. In this embodiment of this application, an input into the encoding network (Encoder) of the encoder side is the correction information and the original pixels of the target region, and an output is the residual feature map of the enhancement layer of the target region.

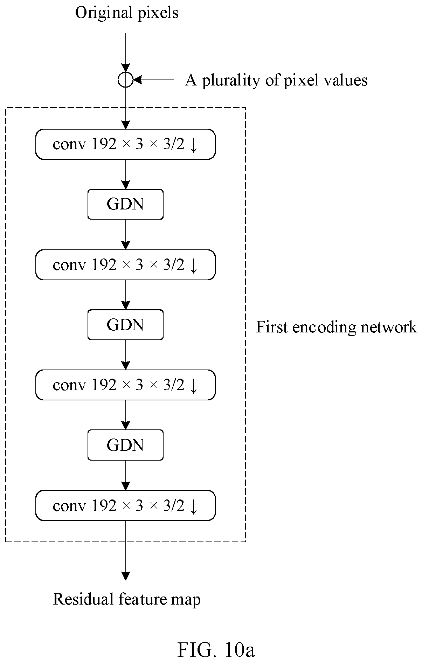

FIG. 10a is an example diagram of an encoding network. As shown in FIG. 10a, the encoding network may be a first encoding network that includes four convolutional layers and three GDNs. Subtraction is performed on the original pixels and the corresponding pixel values in the correction information (the plurality of pixel values), and then a subtraction result is input into the first encoding network to obtain the residual feature map. In this embodiment, because the correction information (the plurality of pixel values) corresponds to pixel domains, subtraction may be directly performed on the correction information and the original pixels of the target region.

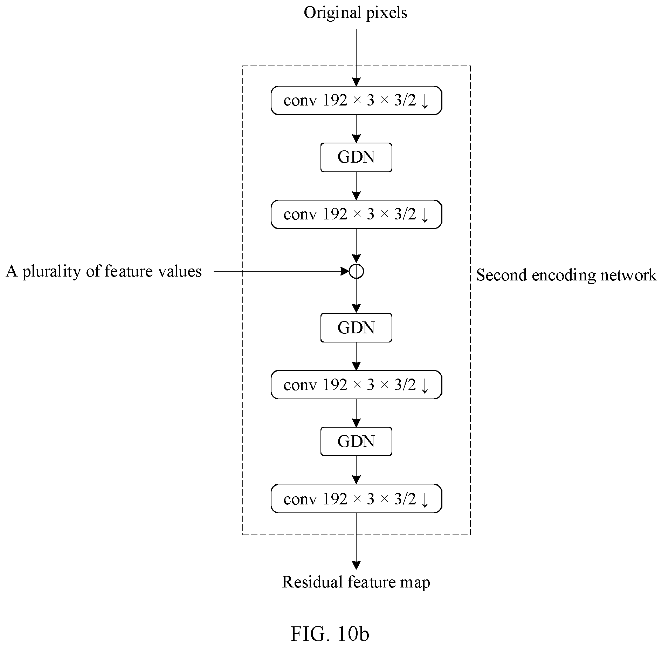

FIG. 10b is an example diagram of an encoding network. As shown in FIG. 10b, the encoding network may be a second encoding network that includes four convolutional layers and three GDNs. The original pixels are input into the second encoding network, subtraction is performed on an output of any convolutional layer (for example, a second convolutional layer) in the second encoding network and corresponding feature values in the correction information (the plurality of feature values), and then a subtraction result is input into a network layer after the any convolutional layer (for example, the second convolutional layer) in the second encoding network, to obtain the residual feature map. In this embodiment, because the correction information (the plurality of feature values) corresponds to feature domains, the original pixels need to be first input into the second encoding network and converted into the feature domains, and then subtraction is performed on the feature domains and the plurality of feature values.

It should be noted that, in addition to the foregoing two examples of the encoding network, an encoding network of another structure may alternatively be used in embodiments of this application. This is not specifically limited herein.

Step 804: Encode the residual feature map to obtain an enhancement layer bitstream of the target region.

In this embodiment of this application, a plurality of probability distributions may be obtained, where the plurality of probability distributions correspond to the plurality of feature values included in the residual feature map. Then, entropy encoding is performed on the corresponding feature values in the residual feature map based on the plurality of probability distributions respectively to obtain the enhancement layer bitstream.

The residual feature map of the enhancement layer of the target region includes the plurality of feature values. To perform entropy encoding on the plurality of feature values, the probability distributions of the plurality of feature values need to be obtained. The following are several methods for obtaining the plurality of probability distributions:

    1. Obtain the plurality of probability distributions based on the correction information.

    1.1. Input the correction information into a probability estimation network to obtain the plurality of probability distributions.

The probability estimation network may also include a convolutional layer and a GDN. Whether the probability estimation network is another activation function is not limited. In this embodiment of this application, a quantity of convolutional layers is not limited, and a size of a convolution kernel is not limited either. In this embodiment of this application, a probability distribution model is first used for modeling, then the correction information is input into the probability estimation network to obtain model parameters, and the model parameters are substituted into the probability distribution model to obtain the probability distributions. The probability distribution model may be a Gaussian single model (Gaussian single model, GSM), an asymmetric Gaussian model, a Gaussian mixture model (Gaussian mixture model, GMM), or a Laplace distribution (Laplace distribution) model. When the probability distributions are Gaussian distributions, the model parameters are values of a mean value parameter $\mu$ and a variance $\sigma$ of the Gaussian distributions. When the probability distributions are Laplacian distributions, the model parameters are values of a location parameter $\mu$ and a scale parameter b of the Laplacian distributions. It should be understood that, in addition to the foregoing probability distribution model, another model may alternatively be used. This is not specifically limited herein.

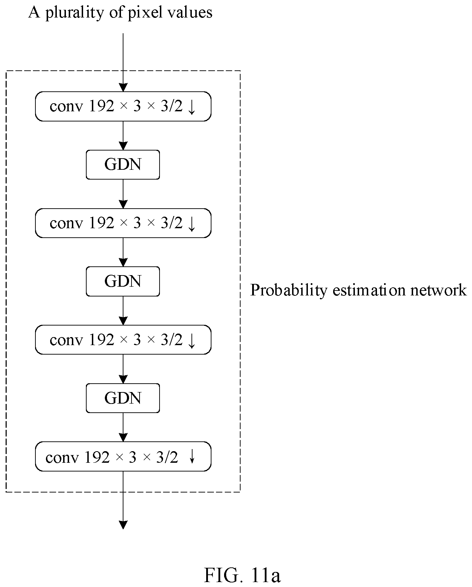

FIG. 11a is an example diagram of a probability estimation network. As shown in FIG. 11a, the probability estimation network includes four convolutional layers and three GDNs, and correction information input into the probability estimation network is a plurality of pixel values.

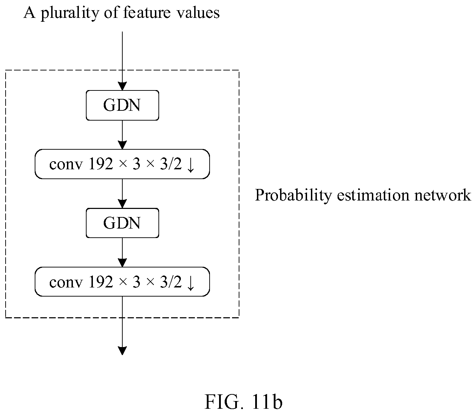

FIG. 11b is an example diagram of a probability estimation network. As shown in FIG. 11b, the probability estimation network includes two convolutional layers and two GDNs, and correction information input into the probability estimation network is a plurality of feature values.

It should be noted that, in addition to the foregoing two examples of the probability estimation network, a probability estimation network of another structure may alternatively be used in embodiments of this application. This is not specifically limited herein.

1.2. Obtain the plurality of probability distributions based on the correction information and reconstructed side information of the residual feature map.

a. When the correction information is the plurality of feature values, input the reconstructed side information into a side information processing network to obtain a first feature map, and input the plurality of feature values and the first feature map into the probability estimation network to obtain the plurality of probability distributions.

In this embodiment of this application, the residual feature map of the enhancement layer of the target region may be input into a side information extraction network to obtain side information of the residual feature map, entropy encoding is performed on the side information, and encoded side information is written into a bitstream. In this case, the side information of the residual feature map is used as the reconstructed side information of the residual feature map. The side information may be considered as a feature map that is obtained by further performing feature extraction on the residual feature map of the enhancement layer of the target region and that has a same dimension as the foregoing residual feature map. Therefore, the side information extraction network is configured to further perform feature extraction on the residual feature map of the enhancement layer of the target region and obtain the feature map that has the same dimension as the foregoing residual feature map.

The side information processing network may perform feature extraction on the side information to output the first feature map having same resolution as the residual feature map. For example, in the side information processing network, a neural network formed by interpolating and cascading three deconvolutional layers and two activation layers is used to implement the foregoing functions.

For the probability estimation network, refer to the foregoing description. Details are not described herein again.

b. When the correction information is the plurality of pixel values, input the plurality of pixel values into a feature estimation network (estimate) to obtain a second feature map, input the reconstructed side information into a side information processing network to obtain a first feature map, and input the first feature map and the second feature map into the probability estimation network to obtain the plurality of probability distributions.

The feature estimation network may convert pixel values (a plurality of pixel values) represented by pixel domains into feature values (the second feature map) represented by feature domains. The feature estimation network may use the structure of the probability estimation network shown in FIG. 11b and differ from the probability estimation network in an input process, an output process, and a training process. Because of the difference in the input process, the output process, and the training process, even if the network structures are the same (that is, the included layer structures are the same), the feature estimation network may still be considered as a different network and complete different functions.

For the side information processing network and the probability estimation network, refer to the foregoing description. Details are not described herein again.

2. Obtain the plurality of probability distributions based on reconstructed side information of the residual feature map.
2.1. Input the reconstructed side information into a probability estimation network to obtain the plurality of probability distributions.

For the probability estimation network, refer to the foregoing description. Details are not described herein again.

2.2. Obtain the plurality of probability distributions based on the reconstructed side information and the reconstructed pixels.

In this embodiment of this application, the reconstructed pixels of the residual feature map may be input into a feature estimation network to obtain a third feature map, the reconstructed side information may be input into a side information processing network to obtain a first feature map, and the first feature map and the third feature map may be input into the probability estimation network to obtain the plurality of probability distributions.

For the feature estimation network, the side information processing network, and the probability estimation network, refer to the foregoing description. Details are not described herein again.

In this embodiment of this application, AI encoding is applied to the enhancement layer of the selected target region. On this basis, the correction network removes the noise signals not beneficial to encoding of the AI enhancement layer from the reconstructed pixels of the base layer, to obtain the correction information, and then encodes the residual feature map of the enhancement layer of the target region based on the correction information. Encoding of the enhancement layer is performed only on a region in need (the target region). This can reduce encoding complexity of the enhancement layer and improve encoding efficiency of the enhancement layer. In addition, encoding is performed based on the correction information. This can improve encoding accuracy.

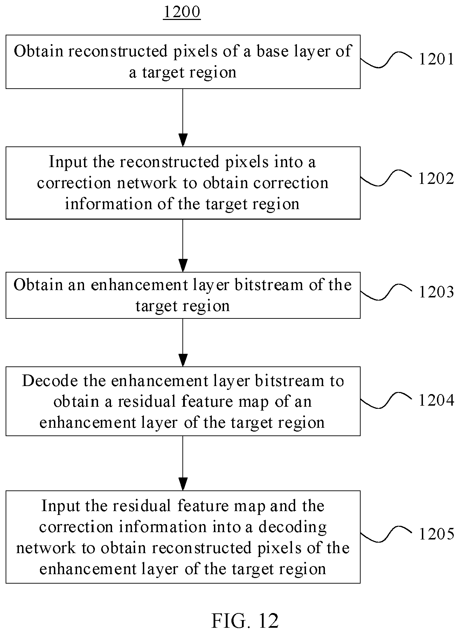

FIG. 12 is a flowchart of a process 1200 of a method for decoding a region enhancement layer according to an embodiment of this application. The process 1200 may be performed by a video decoder 30. The process 1200 is described as a series of steps or operations. It should be understood that the steps or operations of the process 1200 may be performed in various sequences and/or simultaneously, and are not limited to an execution sequence shown in FIG. 12. Assuming that a bitstream is using the video decoder 30, the process 1200 including the following steps is performed to decode the bitstream to obtain reconstructed pixels of the region enhancement layer. The process 1200 may include the following steps.

Step 1201: Obtain reconstructed pixels of a base layer of a target region.

Corresponding to an encoder side, a decoder side may receive a bitstream from the encoder side. The bitstream includes a base layer bitstream obtained after the encoder side encodes original pixels of an image. Therefore, the decoder side decodes the base layer bitstream to obtain a reconstructed image of the base layer of the image.

In this embodiment of this application, the decoder side may obtain the reconstructed pixels of the base layer of the target region in a manner the same as that of the encoder side. For details, refer to the description of step 801. Details are not described herein again.

Step 1202: Input the reconstructed pixels into a correction network to obtain correction information of the target region.

For step 1202, refer to the description of step 802. Details are not described herein again.

Step 1203: Obtain an enhancement layer bitstream of the target region.

In step 804, the encoder side encodes a residual feature map to obtain the enhancement layer bitstream of the target region. Therefore, correspondingly, the bitstream received by the decoder side further includes the enhancement layer bitstream of the target region.

Step 1204: Decode the enhancement layer bitstream to obtain a residual feature map of an enhancement layer of the target region.

In this embodiment of this application, a plurality of probability distributions may be obtained, where the plurality of probability distributions correspond to a plurality of feature value bitstreams included in the enhancement layer bitstream. Then, entropy decoding is performed on the corresponding feature value bitstreams in the enhancement layer bitstream based on the plurality of probability distributions to obtain the residual feature map of the target region.

The enhancement layer bitstream includes the plurality of feature value bitstreams. To perform entropy decoding on the plurality of feature value bitstreams, the probability distributions of the plurality of feature value bitstreams need to be obtained. For several methods for obtaining the plurality of probability distributions, refer to the description in step 804. Details are not described herein again.

Step 1205: Input the residual feature map and the correction information into a decoding network to obtain reconstructed pixels of the enhancement layer of the target region.

Corresponding to step 803, the encoder side obtains the residual feature map of the enhancement layer of the target region through the encoding network based on the input correction information and the original pixels of the target region, and the decoder side obtains the reconstructed pixels of the enhancement layer of the target region reversely through the decoding network based on the input residual feature map and the correction information.

The correction information may have two cases: one is the plurality of pixel values, and the other is the plurality of feature values. Correspondingly, the decoding network may also use two structures. In this embodiment of this application, a decoding network (Decoder) at the decoder side inputs the correction information and the residual feature map of the enhancement layer of the target region, and outputs the reconstructed pixels of the enhancement layer of the target region.

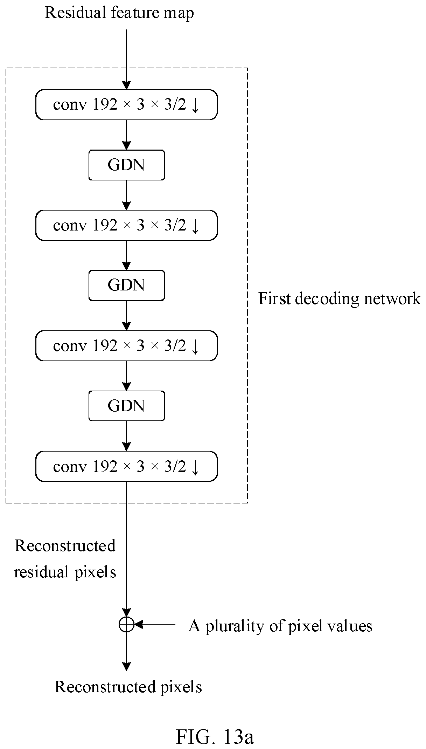

FIG. 13a is an example diagram of a decoding network. As shown in FIG. 13a, the decoding network may be a first decoding network that includes four convolutional layers and three GDNs. The residual feature map is first input into the first decoding network to obtain reconstructed residual pixels of the enhancement layer of the target region, and then the reconstructed residual pixels and corresponding pixel values in the correction information are summed to obtain the reconstructed pixels, where the correction information is the plurality of pixel values. In this embodiment, because the correction information (the plurality of pixel values) corresponds to the pixel domains, the correction information and the reconstructed residual pixels of the enhancement layer of the target region may be directly summed.

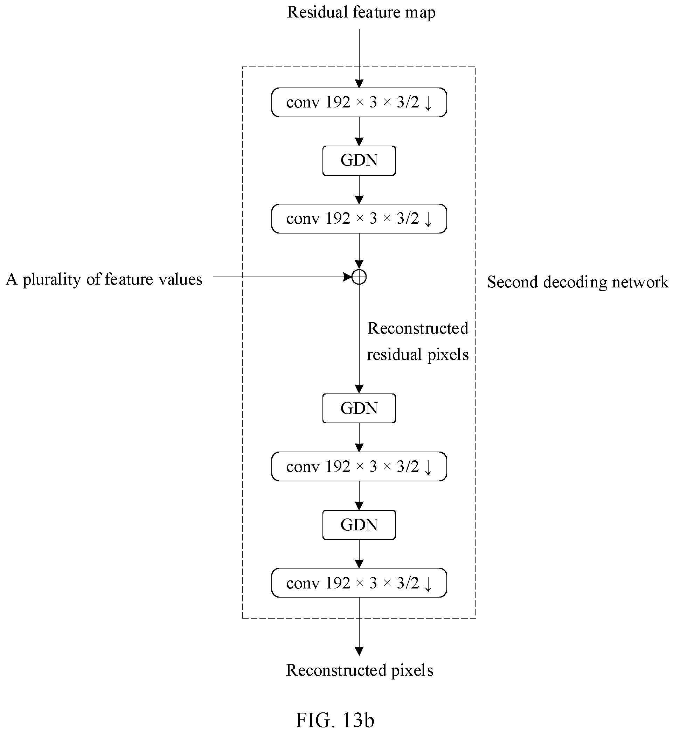

FIG. 13b is an example diagram of a decoding network. As shown in FIG. 13b, the decoding network may be a second decoding network that includes four convolutional layers and three GDNs. The residual feature map is first input into the second decoding network, an output of any convolutional layer (for example, a second convolutional layer) in the second decoding network and corresponding feature values in the correction information (the plurality of feature values) are summed, and then a summation result is input into a network layer after the any convolutional layer (for example, the second convolutional layer) in the second decoding network, to obtain the reconstructed pixels. In this embodiment, because the correction information (the plurality of feature values) corresponds to feature domains, the residual feature map needs to be first input into the second decoding network to be converted into the feature domains, and then the feature domains and the plurality of feature values are summed.

It should be noted that, in addition to the foregoing two examples of the decoding network, a decoding network of another structure may alternatively be used in embodiments of this application. This is not specifically limited herein.

In this embodiment of this application, AI decoding is applied to the enhancement layer bitstream. On this basis, the correction network removes noise signals not beneficial to encoding of an AI enhancement layer from the reconstructed pixels of the base layer, to obtain the correction information, and then decodes the enhancement layer bitstream based on the correction information. Decoding of the enhancement layer is performed only on a region in need (the target region). This can reduce decoding complexity of the enhancement layer and improve decoding efficiency of the enhancement layer. In addition, decoding is performed based on the correction information. This can improve decoding accuracy.

The following provides several specific embodiments for describing the solutions of embodiments of this application.

**Embodiment 1**

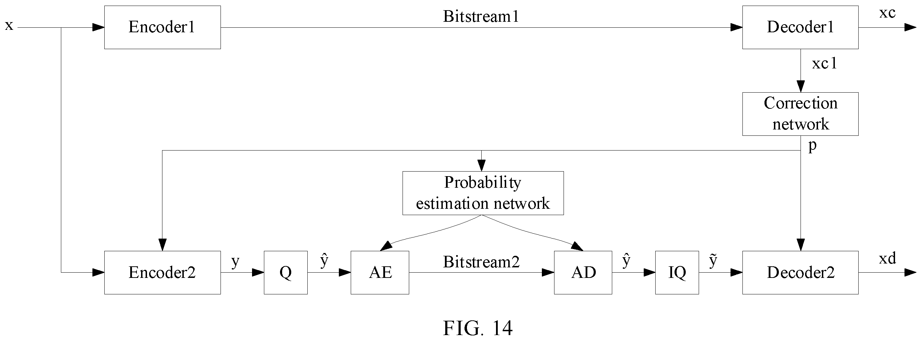

FIG. 14 is an example diagram of an encoding and decoding process. As shown in FIG. 14, the process in this embodiment is described below.

Encoder side:

> 1. A base layer encoder (Encoder1) encodes an original image x to obtain a base layer bitstream (Bitstream1), and a base layer decoder (Decoder1) decodes the Bitstream1 to obtain a reconstructed image xc.

The Encoder1 and the Decoder1 may perform base layer encoding and decoding by using a conventional video coding standard, for example, an H.264/AVC, H.265/HEVC, or H.266/VVC standard, or may perform base layer encoding and decoding by using an existing JPEG image encoding standard. This is not specifically limited herein.

2. At least one region to be enhanced is determined in xc, where one of the regions is a target region xc1.

The determining method may include selecting a region with complex texture, selecting a region of interest to human eyes, or randomly selecting one or more regions. A related technology may be applied in this step. This is not specifically limited herein.

For example, when a variance of a region is greater than a threshold t1, the region is a region with complex texture and may be used as a target region; or when a proportion of pixels whose gradients are greater than a threshold a and that are in a region is greater than t2, the region is determined as a region with complex texture and may be used as a target region. t1 and a are numbers greater than 0, and t2 is a number from 0 to 1.

3. Reconstructed pixels of a base layer of xc1 are input into a correction network, and correction information (p) is output.

The correction network functions to remove noise signals not beneficial to encoding of an AI enhancement layer. The correction network may output a plurality of pixel domains and/or a plurality of feature domains. The correction information includes the foregoing plurality of pixel domains or the foregoing plurality of feature domains. For example, the following three methods may be used:

> Method 1: The reconstructed pixels of the base layer of xc1 are input into the correction network shown in FIG. 9a, and a plurality of pixel values are output as p.
> Method 2: The reconstructed pixels of the base layer of xc1 are input into the correction network shown in FIG. 9b, and a plurality of feature values are output as p.
> Method 3: The reconstructed pixels of the base layer of xc1 are input into the correction network shown in FIG. 9c, a plurality of pixel values and a plurality of feature values are output, and one of the pixel values and the feature values is used as p.

4. x and p are input into an enhancement layer encoder (Encoder2), a residual feature map (y) of an enhancement layer of the target region is output, and quantization (Q) is performed on y to obtain a quantized residual feature map (y).

There are two types of correction information: pixel values or feature values. Both the pixel values and the feature values may be used to be input into the Encoder2, but a structure of the Encoder2 varies. If the correction information is the pixel values, the Encoder2 uses the structure shown in FIG. 10a. If the correction information is the feature values, the Encoder2 uses the structure shown in FIG. 10b.

It should be noted that a specific quantization method is not limited in embodiments of this application. Alternatively, a floating point number in y may be truncated to obtain an integer, or a quantized feature value may be obtained by performing quantization based on a preset quantization step.

5. p is input into a probability estimation network, probability distributions of all feature values of y are output, and entropy encoding (AE) is performed on y based on the probability distributions to obtain an enhancement layer bitstream (Bitstream2).

There are two types of correction information: pixel values or feature values. Both the pixel values and the feature values may be input into the probability estimation network, but a structure of the probability estimation network varies. If the correction information is the pixel values, the probability estimation network uses the structure shown in FIG. 11a. If the correction information is the feature values, the probability estimation network uses the structure shown in FIG. 11b.

Decoder side:

1. A base layer decoder (Decoder1) parses a base layer bitstream (Bitstream1) to obtain a reconstructed image xc.
2. At least one region to be enhanced is determined in xc, where one of the regions is a target region xc1.
3. Reconstructed pixels of a base layer of xc1 are input into a correction network, and correction information (p) is output.
4. p is input into a probability estimation network, probability distributions of all feature values of y are output, entropy decoding (AD) is performed on an enhancement layer bitstream (Bitstream2) based on the probability distributions to obtain a residual feature map y of an enhancement layer of xc1, and inverse quantization (IQ) is performed on y to obtain an inversely quantized residual feature map (ȳ).
5. p and ȳ are input to an enhancement layer decoder (Decoder2), and reconstructed pixels (xd) of an enhancement layer of xc1 are output.
6. Pixels corresponding to a location of xc1 in xc are replaced with pixels xd to obtain an enhanced reconstructed image.

**Embodiment 2**

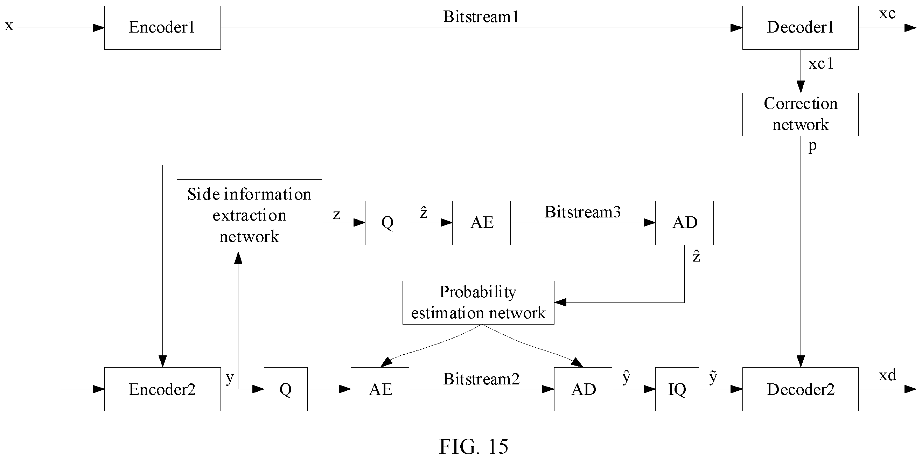

FIG. 15 is an example diagram of an encoding and decoding process. As shown in FIG. 15, a difference between this embodiment and Embodiment 1 lies in a method for obtaining probability distributions.

Encoder side:

1. A base layer encoder (Encoder1) encodes an original image x to obtain a base layer bitstream (Bitstream1), and a base layer decoder (Decoder1) decodes the Bitstream1 to obtain a reconstructed image xc.

The Encoder1 and the Decoder1 may perform base layer encoding and decoding by using a conventional video coding standard, for example, an H.264/AVC, H.265/HEVC, or H.266/VVC standard, or may perform base layer encoding and decoding by using an existing JPEG image encoding standard. This is not specifically limited herein.

2. At least one region to be enhanced is determined in xc, where one of the regions is a target region xc1.

The determining method may include selecting a region with complex texture, selecting a region of interest to human eyes, or randomly selecting one or more regions. A related technology may be applied in this step. This is not specifically limited herein.

For example, when a variance of a region is greater than a threshold t1, the region is a region with complex texture and may be used as a target region; or when a proportion of pixels whose gradients are greater than a threshold a and that are in a region is greater than t2, the region is determined as a region with complex texture and may be used as a target region. t1 and a are numbers greater than 0, and t2 is a number from 0 to 1.

3. Reconstructed pixels of a base layer of xc1 are input into a correction network, and correction information (p) is output.

The correction network functions to remove noise signals not beneficial to encoding of an AI enhancement layer. The correction network may output a plurality of pixel domains and/or a plurality of feature domains. The correction information is the plurality of pixel domains or the plurality of feature domains. For example, the following three methods may be used:

Method 1: The reconstructed pixels of the base layer of xc1 are input into the correction network shown in FIG. 9a, and a plurality of pixel values are output as p.

Method 2: The reconstructed pixels of the base layer of xc1 are input into the correction network shown in FIG. 9b, and a plurality of feature values are output as p.

Method 3: The reconstructed pixels of the base layer of xc1 are input into the correction network shown in FIG. 9c, a plurality of pixel values and a plurality of feature values are output, and one of the pixel values and the feature values is used as p.

4. x and p are input into an enhancement layer encoder (Encoder2), a residual feature map (y) of an enhancement layer of the target region is output, and quantization (Q) is performed on y to obtain a quantized residual feature map ($\hat{y}$).

There are two types of correction information: pixel values or feature values. Both the pixel values and the feature values may be used to be input into the Encoder2, but a structure of the Encoder2 varies. If the correction information is the pixel values, the Encoder2 uses the structure shown in FIG. 10a. If the correction information is the feature values, the Encoder2 uses the structure shown in FIG. 10b.

It should be noted that a specific quantization method is not limited in embodiments of this application. Alternatively, a floating point number in y may be truncated to obtain an integer, or a quantized feature value may be obtained by performing quantization based on a preset quantization step.

5. y is input into a side information extraction network to obtain side information z of y, quantization (Q) is performed on z to obtain quantized side information ($\hat{z}$), entropy encoding (AE) is performed on $\hat{z}$ to obtain a bitstream (Bitstream3), and then entropy decoding (AD) is performed on the Bitstream3 to obtain reconstructed side information (2). In addition, the encoder side may transmit the Bitstream3 to a decoder side.

6. $\hat{z}$ is input into a probability estimation network, probability distributions of all feature values of y are output, and entropy encoding (AE) is performed on y based on the probability distributions to obtain an enhancement layer bitstream (Bitstream2).

Decoder side:

1. A base layer decoder (Decoder1) parses a base layer bitstream (Bitstream1) to obtain a reconstructed image xc.

2. At least one region to be enhanced is determined in xc, where one of the regions is a target region xc1.

3. Reconstructed pixels of a base layer of xc1 are input into a correction network, and correction information (p) is output.

4. A bitstream (Bitstream3) is parsed to obtain reconstructed side information ($\hat{z}$).

5. $\hat{z}$ is inputted into a probability estimation network, probability distributions of all feature bitstreams of an enhancement layer bitstream (Bitstream2) are output, and entropy encoding (AE) is performed on the Bitstream2 based on the probability distributions to obtain a residual feature map (y) of the enhancement layer of the target region.

6. p and $\hat{y}$ are input to an enhancement layer decoder (Decoder2), and reconstructed pixels (xd) of an enhancement layer of xc1 are output.

7. Pixels corresponding to a location of xc1 in xc are replaced with pixels xd to obtain an enhanced reconstructed image.

**Embodiment 3**

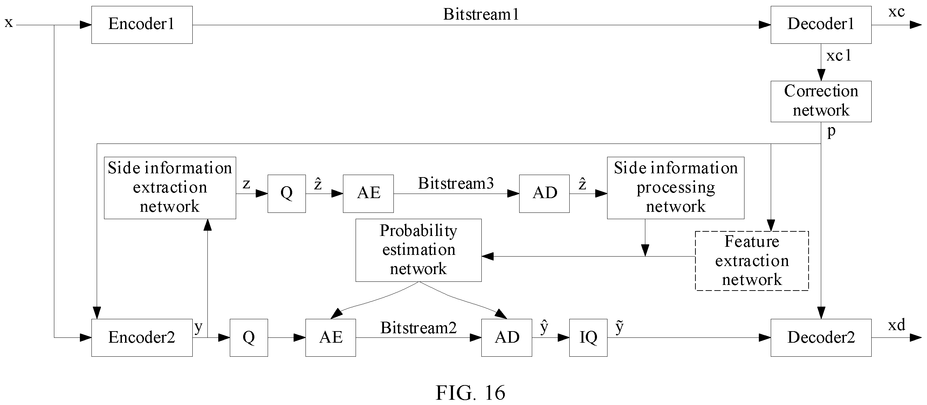

FIG. 16 is an example diagram of an encoding and decoding process. As shown in FIG. 16, a difference between this embodiment and Embodiment 2 lies in a method for obtaining probability distributions.

Encoder side:

1. A base layer encoder (Encoder1) encodes an original image x to obtain a base layer bitstream (Bitstream1), and a base layer decoder (Decoder1) decodes the Bitstream1 to obtain a reconstructed image xc.

The Encoder1 and the Decoder1 may perform base layer encoding and decoding by using a conventional video coding standard, for example, an H.264/AVC, H.265/HEVC, or H.266/VVC standard, or may perform base layer encoding and decoding by using an existing JPEG image encoding standard. This is not specifically limited herein.

2. At least one region to be enhanced is determined in xc, where one of the regions is a target region xc1.

The determining method may include selecting a region with complex texture, selecting a region of interest to human eyes, or randomly selecting one or more regions. A related technology may be applied in this step. This is not specifically limited herein.

For example, when a variance of a region is greater than a threshold t1, the region is a region with complex texture and may be used as a target region; or when a proportion of pixels whose gradients are greater than a threshold a and that are in a region is greater than t2, the region is determined as a region with complex texture and may be used as a target region. t1 and a are numbers greater than 0, and t2 is a number from 0 to 1.

3. Reconstructed pixels of a base layer of xc1 are input into a correction network, and correction information (p) is output.

The correction network functions to remove noise signals not beneficial to encoding of an AI enhancement layer. The correction network may output a plurality of pixel domains and/or a plurality of feature domains. The correction information is the plurality of pixel domains or the plurality of feature domains. For example, the following three methods may be used:

Method 1: The reconstructed pixels of the base layer of xc1 are input into the correction network shown in FIG. 9a, and a plurality of pixel values are output as p.

Method 2: The reconstructed pixels of the base layer of xc1 are input into the correction network shown in FIG. 9b, and a plurality of feature values are output as p.

Method 3: The reconstructed pixels of the base layer of xc1 are input into the correction network shown in FIG. 9c, a plurality of pixel values and a plurality of feature values are output, and one of the pixel values and the feature values is used as p.

4. x and p are input into an enhancement layer encoder (Encoder2), a residual feature map (y) of an enhancement layer of the target region is output, and quantization (Q) is performed on y to obtain a quantized residual feature map (y).

There are two types of correction information: pixel values or feature values. Both the pixel values and the feature values may be used to be input into the Encoder2, but a structure of the Encoder2 varies. If the correction information is the pixel values, the Encoder2 uses the structure shown in FIG. 10a. If the correction information is the feature values, the Encoder2 uses the structure shown in FIG. 10b.

It should be noted that a specific quantization method is not limited in embodiments of this application. Alternatively, a floating point number in y may be truncated to obtain an integer, or a quantized feature value may be obtained by performing quantization based on a preset quantization step.

5. y is input into a side information extraction network to obtain side information z of y, quantization (Q) is performed on z to obtain quantized side information (ż), entropy encoding (AE) is performed on ż to obtain a bitstream (Bitstream3), and then entropy decoding (AD) is performed on the Bitstream3 to obtain reconstructed side information (2). In addition, the encoder side may transmit the Bitstream3 to a decoder side.

6. ż is inputted into a side information processing network to obtain reconstructed side information of the feature domains.

7. If p is the plurality of pixel values, the plurality of pixel values need to be input into a feature estimation network for feature extraction. If p is the plurality of feature values, the plurality of feature values do not need to be input into a feature estimation network.

8. The reconstructed side information of the feature domains and p of the feature domains are input into a probability estimation network, probability distributions of all feature values of y are output, and entropy encoding (AE) is performed on y based on the probability distributions to obtain an enhancement layer bitstream (Bitstream2).

Decoder side:

1. A base layer decoder (Decoder1) parses a base layer bitstream (Bitstream1) to obtain a reconstructed image xc.

2. At least one region to be enhanced is determined in xc, where one of the regions is a target region xc1.

3. Reconstructed pixels of a base layer of xc1 are input into a correction network, and correction information (p) is output.

4. A bitstream (Bitstream3) is parsed to obtain reconstructed side information (ż).

5. ż is inputted into a side information processing network to obtain reconstructed side information of the feature domains.

6. If p is the plurality of pixel values, the plurality of pixel values need to be input into a feature estimation network for feature extraction. If p is the plurality of feature values, the plurality of feature values do not need to be input into a feature estimation network.

7. The reconstructed side information of the feature domains and p of the feature domains are inputted into a probability estimation network, probability distributions of all feature bitstreams of an enhancement layer bitstream (Bitstream2) are output, and entropy encoding (AE) is performed on the Bitstream2 based on the probability distributions to obtain a residual feature map ($\hat{y}$) of the enhancement layer of the target region.

8. p and $\hat{y}$ are input to an enhancement layer decoder (Decoder2), and reconstructed pixels (xd) of an enhancement layer of xc1 are output.

9. Pixels corresponding to a location of xc1 in xc are replaced with pixels xd to obtain an enhanced reconstructed image.

**Embodiment 4**

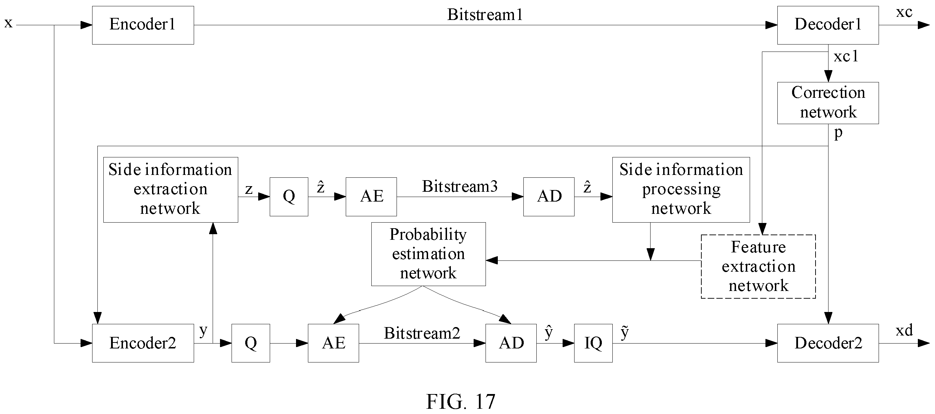

FIG. 17 is an example diagram of an encoding and decoding process. As shown in FIG. 17, a difference between this embodiment and Embodiment 3 lies in a method for obtaining probability distributions.

Encoder side:

1. A base layer encoder (Encoder1) encodes an original image x to obtain a base layer bitstream (Bitstream1), and a base layer decoder (Decoder1) decodes the Bitstream1 to obtain a reconstructed image xc.

The Encoder1 and the Decoder1 may perform base layer encoding and decoding by using a conventional video coding standard, for example, an H.264/AVC, H.265/HEVC, or H.266/VVC standard, or may perform base layer encoding and decoding by using an existing JPEG image encoding standard. This is not specifically limited herein.

2. At least one region to be enhanced is determined in xc, where one of the regions is a target region xc1.

The determining method may include selecting a region with complex texture, selecting a region of interest to human eyes, or randomly selecting one or more regions. A related technology may be applied in this step. This is not specifically limited herein.

For example, when a variance of a region is greater than a threshold 11, the region is a region with complex texture and may be used as a target region; or when a proportion of pixels whose gradients are greater than a threshold a and that are in a region is greater than t2, the region is determined as a region with complex texture and may be used as a target region. t1 and a are numbers greater than 0, and t2 is a number from 0 to 1.

3. Reconstructed pixels of a base layer of xc1 are input into a correction network, and correction information (p) is output.

The correction network functions to remove noise signals not beneficial to encoding of an AI enhancement layer. The correction network may output a plurality of pixel domains and/or a plurality of feature domains. The correction information is the plurality of pixel domains or the plurality of feature domains. For example, the following three methods may be used:

Method 1: The reconstructed pixels of the base layer of xc1 are input into the correction network shown in FIG. 9a, and a plurality of pixel values are output as p.

Method 2: The reconstructed pixels of the base layer of xc1 are input into the correction network shown in FIG. 9b, and a plurality of feature values are output as p.

Method 3: The reconstructed pixels of the base layer of xc1 are input into the correction network shown in FIG. 9c, a plurality of pixel values and a plurality of feature values are output, and one of the pixel values and the feature values is used as p.

4. x and p are input into an enhancement layer encoder (Encoder2), a residual feature map (y) of an enhancement layer of the target region is output, and quantization (Q) is performed on y to obtain a quantized residual feature map (9).

There are two types of correction information: pixel values or feature values. Both the pixel values and the feature values may be used to be input into the Encoder2, but a structure of the Encoder2 varies. If the correction information is the pixel values, the Encoder2 uses the structure shown in FIG. 10a. If the correction information is the feature values, the Encoder2 uses the structure shown in FIG. 10b.

It should be noted that a specific quantization method is not limited in embodiments of this application. Alternatively, a floating point number in y may be truncated to obtain an integer, or a quantized feature value may be obtained by performing quantization based on a preset quantization step.

5. y is input into a side information extraction network to obtain side information z of y, quantization (Q) is performed on z to obtain quantized side information (2), entropy encoding (AE) is performed on ẑ to obtain a bitstream (Bitstream3), and then entropy decoding (AD) is performed on the Bitstream3 to obtain reconstructed side information (2). In addition, the encoder side may transmit the Bitstream3 to a decoder side.

6. ẑ is inputted into a side information processing network to obtain reconstructed side information of the feature domains.

7. xc1 is input into a feature estimation network for feature extraction.

8. The reconstructed side information and xc1 that both belong to the feature domains are input into a probability estimation network, probability distributions of all feature values of ŷ are output, and entropy encoding (AE) is performed on ŷ based on the probability distributions to obtain an enhancement layer bitstream (Bitstream2).

Decoder side:

1. Abase layer decoder (Decoder1) parses a base layer bitstream (Bitstream1) to obtain a reconstructed image xc.
2. At least one region to be enhanced is determined in xc, where one of the regions is a target region xc1.
3. Reconstructed pixels of a base layer of xc1 are input into a correction network, and correction information (p) is output.
4. A bitstream (Bitstream3) is parsed to obtain reconstructed side information (2).
5. ẑ is inputted into a side information processing network to obtain reconstructed side information of the feature domains.
6. xc1 is input into a feature estimation network for feature extraction.
7. The reconstructed side information and xc1 that both belong to the feature domains are inputted into a probability estimation network, probability distributions of all feature bitstreams of an enhancement layer bitstream (Bitstream2) are output, and entropy encoding (AE) is performed on the Bitstream2 based on the probability distributions to obtain a residual feature map (y) of the enhancement layer of the target region.
8. p and ŷ are input to an enhancement layer decoder (Decoder2), and reconstructed pixels (xd) of an enhancement layer of xc1 are output.
9. Pixels corresponding to a location of xc1 in xc are replaced with pixels xd to obtain an enhanced reconstructed image.

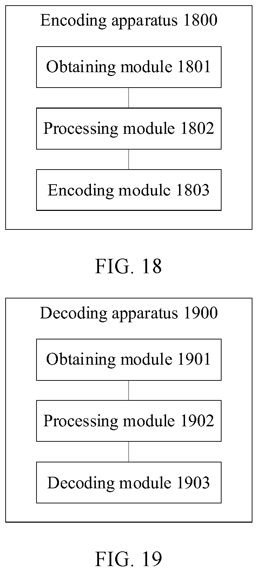

FIG. 18 is an example diagram of a structure of an encoding apparatus 1800 according to an embodiment of this application. As shown in FIG. 18, the encoding apparatus 1800 in this embodiment may be used at an encoder side 20. The encoding apparatus 1800 may include an obtaining module 1801, a processing module 1802, and an encoding module 1803.

The obtaining module 1801 is configured to obtain reconstructed pixels of a base layer of a target region. The processing module 1802 is configured to input the reconstructed pixels into a correction network to obtain correction information of the target region; and input the correction information and original pixels of the target region into an encoding network to obtain a residual feature map of an enhancement layer of the target region. The encoding module 1803 is configured to encode the residual feature map to obtain an enhancement layer bitstream of the target region.

In a possible implementation, the processing module 1802 is specifically configured to input the reconstructed pixels into the correction network to obtain at least one of a plurality of pixel values and a plurality of feature values of the target region, where the correction information is the plurality of pixel values or the plurality of feature values.

In a possible implementation, the encoding module 1803 is specifically configured to: obtain a plurality of probability distributions based on the correction information, where the plurality of probability distributions correspond to the plurality of feature values included in the residual feature map; and perform entropy encoding on the corresponding feature values in the residual feature map based on the plurality of probability distributions respectively to obtain the enhancement layer bitstream.

In a possible implementation, the encoding module 1803 is specifically configured to input the correction information into a probability estimation network to obtain the plurality of probability distributions.

In a possible implementation, the encoding module 1803 is specifically configured to obtain the plurality of probability distributions based on the correction information and reconstructed side information of the residual feature map.

In a possible implementation, the encoding module 1803 is specifically configured to: when the correction information is the plurality of feature values, input the reconstructed side information into a side information processing network to obtain a first feature map; and input the plurality of feature values and the first feature map into a probability estimation network to obtain the plurality of probability distributions.

In a possible implementation, the encoding module 1803 is specifically configured to: when the correction information is the plurality of pixel values, input the plurality of pixel values into a feature estimation network to obtain a second feature map; input the reconstructed side information into a side information processing network to obtain a first feature map; and input the first feature map and the second feature map into a probability estimation network to obtain the plurality of probability distributions.

In a possible implementation, the encoding module 1803 is specifically configured to: obtain a plurality of probability distributions based on the reconstructed side information of the residual feature map, where the plurality of probability distributions correspond to the plurality of feature values included in the residual feature map; and perform entropy encoding on the corresponding feature values in the residual feature map based on the plurality of probability distributions respectively to obtain the enhancement layer bitstream.

In a possible implementation, the encoding module 1803 is specifically configured to input the reconstructed side information into a probability estimation network to obtain the plurality of probability distributions.

In a possible implementation, the encoding module 1803 is specifically configured to obtain the plurality of probability distributions based on the reconstructed side information and the reconstructed pixels.

In a possible implementation, the encoding module 1803 is specifically configured to: input the reconstructed pixels into a feature estimation network to obtain a third feature map; input the reconstructed side information into a side information processing network to obtain a first feature map; and input the first feature map and the third feature map into a probability estimation network to obtain the plurality of probability distributions.

In a possible implementation, the encoding module 1803 is further configured to: input the residual feature map into a side information extraction network to obtain side information of the residual feature map; and perform entropy encoding on the side information or quantized side information, and write encoded side information into a bitstream.

In a possible implementation, the encoding network includes a first encoding network; and the encoding module 1803 is specifically configured to: when the correction information is the plurality of pixel values, perform subtraction on the original pixels and corresponding pixel values in the correction information; and input a subtraction result into the first encoding network to obtain the residual feature map.

In a possible implementation, the encoding network includes a second encoding network; and the encoding module 1803 is specifically configured to: input the original pixels into the second encoding network; when the correction information is the plurality of feature values, perform subtraction on an output of any convolutional layer in the second encoding network and corresponding feature values in the correction information; and input a subtraction result into a network layer after the any convolutional layer in the second encoding network, to obtain the residual feature map.

In a possible implementation, the encoding module 1803 is further configured to: encode an image to which the target region belongs, to obtain a base layer bitstream of the image; decode the base layer bitstream to obtain a reconstructed image of a base layer of the image; and determine, based on the reconstructed image, at least one region to be enhanced, where the target region is one of the at least one region.

In a possible implementation, the encoding module 1803 is specifically configured to: divide the reconstructed image to obtain a plurality of regions; and determine a region whose variance is greater than a first threshold in the plurality of regions as the at least one region; or determine a proportion of pixels whose gradients are greater than a second threshold and that are in total pixels in each of the plurality of regions, and determine a region whose proportion is greater than a third threshold as the at least one region.

In a possible implementation, the encoding module 1803 is further configured to use the side information of the residual feature map as the reconstructed side information of the residual feature map.

The apparatus in this embodiment may be used to execute the technical solution of the method embodiment shown in FIG. 8, and implementation principles and technical effects of the apparatus are similar and are not described herein again.

FIG. 19 is an example diagram of a structure of a decoding apparatus 1900 according to an embodiment of this application. As shown in FIG. 19, the decoding apparatus 1900 in this embodiment may be used at a decoder side 30. The decoding apparatus 1900 may include an obtaining module 1901, a processing module 1902, and a decoding module 1903.

The obtaining module 1901 is configured to obtain reconstructed pixels of a base layer of a target region. The processing module 1902 is configured to input the reconstructed pixels into a correction network to obtain correction information of the target region. The obtaining module 1901 is further configured to obtain an enhancement layer bitstream of the target region. The decoding module 1903 is configured to decode the enhancement layer bitstream to obtain a residual feature map of an enhancement layer of the target region. The processing module 1902 is further configured to input the residual feature map and the correction information into a decoding network to obtain reconstructed pixels of the enhancement layer of the target region.

In a possible implementation, the processing module 1902 is specifically configured to input the reconstructed pixels into the correction network to obtain at least one of a plurality of pixel values and a plurality of feature values of the target region, where the correction information is the plurality of pixel values or the plurality of feature values.

In a possible implementation, the decoding module 1903 is specifically configured to obtain a plurality of probability distributions based on the correction information, where the plurality of probability distributions correspond to a plurality of feature value bitstreams included in the enhancement layer bitstream; and perform entropy decoding on the corresponding feature value bitstreams in the enhancement layer bitstream based on the plurality of probability distributions respectively to obtain the residual feature map.

In a possible implementation, the decoding module 1903 is specifically configured to input the correction information into a probability estimation network to obtain the plurality of probability distributions.

In a possible implementation, the decoding module 1903 is specifically configured to obtain the plurality of probability distributions based on the correction information and reconstructed side information of the residual feature map.

In a possible implementation, the decoding module 1903 is specifically configured to: when the correction information is the plurality of feature values, input the reconstructed side information into a side information processing network to obtain a first feature map; and input the plurality of feature values and the first feature map into a probability estimation network to obtain the plurality of probability distributions.

In a possible implementation, the decoding module 1903 is specifically configured to: when the correction information is the plurality of pixel values, input the plurality of pixel values into a feature estimation network to obtain a second feature map; input the reconstructed side information into a side information processing network to obtain a first feature map; and input the first feature map and the second feature map into a probability estimation network to obtain the plurality of probability distributions.

In a possible implementation, the decoding module 1903 is specifically configured to obtain a plurality of probability distributions based on the reconstructed side information of the residual feature map, where the plurality of probability distributions correspond to a plurality of feature value bitstreams included in the enhancement layer bitstream; and perform entropy decoding on the corresponding feature value bitstreams in the enhancement layer bitstream based on the plurality of probability distributions respectively to obtain the residual feature map.

In a possible implementation, the decoding module 1903 is specifically configured to input the reconstructed side information into a probability estimation network to obtain the plurality of probability distributions.

In a possible implementation, the decoding module 1903 is specifically configured to obtain the plurality of probability distributions based on the reconstructed side information and the reconstructed pixels.

In a possible implementation, the decoding module 1903 is specifically configured to: input the reconstructed pixels into a feature estimation network to obtain a third feature map; input the reconstructed side information into a side information processing network to obtain a first feature map; and input the first feature map and the third feature map into a probability estimation network to obtain the plurality of probability distributions.

In a possible implementation, the decoding module 1903 is further configured to: input the residual feature map into a side information extraction network to obtain side information of the residual feature map; and use the side information as the reconstructed side information of the residual feature map.

In a possible implementation, the decoding module 1903 is further configured to: obtain a side information bitstream of the target region; and parse the side information bitstream to obtain the reconstructed side information.

In a possible implementation, the decoding network includes a first decoding network; and the decoding module 1903 is specifically configured to: input the residual feature map into the first decoding network to obtain reconstructed residual pixels of the enhancement layer of the target region; and when the correction information is the plurality of pixel values, sum the reconstructed residual pixels and corresponding pixel values in the correction information to obtain the reconstructed pixels.

In a possible implementation, the decoding network includes a second decoding network; and the decoding module 1903 is specifically configured to: input the residual feature map into the second decoding network; when the correction information is the plurality of feature values, sum an output of any convolutional layer in the second decoding network and corresponding feature values in the correction information; and input a summation result into a network layer after the any convolutional layer in the second decoding network, to obtain the reconstructed pixels.

In a possible implementation, the decoding module 1903 is further configured to: obtain a base layer bitstream of an image to which the target region belongs; parse the base layer bitstream to obtain a reconstructed image of a base layer of the image; and determine, based on the reconstructed image, at least one region to be enhanced, where the target region is one of the at least one region.

In a possible implementation, the decoding module 1903 is specifically configured to: divide the reconstructed image to obtain a plurality of regions; and determine a region whose variance is greater than a first threshold in the plurality of regions as the at least one region; or determine a proportion of pixels whose gradients are greater than a second threshold and that are in total pixels in each of the plurality of regions, and determine a region whose proportion is greater than a third threshold as the at least one region.

The apparatus in this embodiment may be used to execute the technical solution of the method embodiment shown in FIG. 12, and implementation principles and technical effects of the apparatus are similar and are not described herein again.

In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

The memory in the foregoing embodiments may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for encoding a region enhancement layer, comprising:

   obtaining reconstructed pixels of a base layer of a target region;
   inputting the reconstructed pixels into a correction network to obtain correction information of the target region;
   inputting the correction information and original pixels of the target region into an encoding network to obtain a residual feature map of an enhancement layer of the target region; and
   encoding the residual feature map to obtain an enhancement layer bitstream of the target region.

2. The method according to claim 1, wherein the inputting the reconstructed pixels into a correction network to obtain correction information of the target region comprises:
   inputting the reconstructed pixels into the correction network to obtain at least one of a plurality of pixel values and a plurality of feature values of the target region, wherein the correction information is the plurality of pixel values or the plurality of feature values.

3. The method according to claim 1 or 2, wherein the encoding the residual feature map to obtain an enhancement layer bitstream of the target region comprises:

   obtaining a plurality of probability distributions based on the correction information, wherein the plurality of probability distributions correspond to the plurality of feature values comprised in the residual feature map; and
   performing entropy encoding on the corresponding feature values in the residual feature map based on the plurality of probability distributions respectively to obtain the enhancement layer bitstream.

4. The method according to claim 3, wherein the obtaining a plurality of probability distributions based on the correction information comprises:
   inputting the correction information into a probability estimation network to obtain the plurality of probability distributions.

5. The method according to claim 3, wherein the obtaining a plurality of probability distributions based on the correction information comprises:
   obtaining the plurality of probability distributions based on the correction information and reconstructed side information of the residual feature map.

6. The method according to claim 5, wherein the obtaining the plurality of probability distributions based on the correction information and reconstructed side information of the residual feature map comprises:

   when the correction information is the plurality of feature values, inputting the reconstructed side information into a side information processing network to obtain a first feature map; and
   inputting the plurality of feature values and the first feature map into a probability estimation network to obtain the plurality of probability distributions.

7. The method according to claim 5, wherein the obtaining the plurality of probability distributions based on the correction information and reconstructed side information of the residual feature map comprises:

   when the correction information is the plurality of pixel values, inputting the plurality of pixel values into a feature estimation network to obtain a second feature map;
   inputting the reconstructed side information into a side information processing network to obtain a first feature map; and
   inputting the first feature map and the second feature map into a probability estimation network to obtain the plurality of probability distributions.

8. The method according to claim 1 or 2, wherein the encoding the residual feature map to obtain an enhancement layer bitstream of the target region comprises:

obtaining a plurality of probability distributions based on reconstructed side information of the residual feature map, wherein the plurality of probability distributions correspond to the plurality of feature values comprised in the residual feature map; and
performing entropy encoding on the corresponding feature values in the residual feature map based on the plurality of probability distributions respectively to obtain the enhancement layer bitstream.

9. The method according to claim 8, wherein the obtaining a plurality of probability distributions based on reconstructed side information of the residual feature map comprises:
inputting the reconstructed side information into a probability estimation network to obtain the plurality of probability distributions.

10. The method according to claim 8, wherein the obtaining a plurality of probability distributions based on reconstructed side information of the residual feature map comprises:
obtaining the plurality of probability distributions based on the reconstructed side information and the reconstructed pixels.

11. The method according to claim 10, wherein the obtaining the plurality of probability distributions based on the reconstructed side information and the reconstructed pixels comprises:

inputting the reconstructed pixels into a feature estimation network to obtain a third feature map;
inputting the reconstructed side information into a side information processing network to obtain a first feature map; and
inputting the first feature map and the third feature map into a probability estimation network to obtain the plurality of probability distributions.

12. The method according to any one of claims 5 to 11, wherein the method further comprises:

inputting the residual feature map into a side information extraction network to obtain side information of the residual feature map; and
performing entropy encoding on the side information or quantized side information, and writing encoded side information into a bitstream.

13. The method according to any one of claims 1 to 12, wherein the encoding network comprises a first encoding network; and the inputting the correction information and original pixels of the target region into an encoding network to obtain a residual feature map of an enhancement layer of the target region comprises:

when the correction information is the plurality of pixel values, performing subtraction on the original pixels and corresponding pixel values in the correction information; and
inputting a subtraction result into the first encoding network to obtain the residual feature map.

14. The method according to any one of claims 1 to 12, wherein the encoding network comprises a second encoding network; and the inputting the correction information and original pixels of the target region into an encoding network to obtain a residual feature map of an enhancement layer of the target region comprises:

inputting the original pixels into the second encoding network;
when the correction information is the plurality of feature values, performing subtraction on an output of any convolutional layer in the second encoding network and corresponding feature values in the correction information; and
inputting a subtraction result into a network layer after the any convolutional layer in the second encoding network, to obtain the residual feature map.

15. The method according to any one of claims 1 to 14, wherein the method further comprises:

encoding an image to which the target region belongs, to obtain a base layer bitstream of the image;
decoding the base layer bitstream to obtain a reconstructed image of a base layer of the image; and

determining, based on the reconstructed image, at least one region to be enhanced, wherein the target region is one of the at least one region.

16. The method according to claim 15, wherein the determining, based on the reconstructed image, at least one region to be enhanced comprises:

dividing the reconstructed image to obtain a plurality of regions; and
determining a region whose variance is greater than a first threshold in the plurality of regions as the at least one region; or
determining a proportion of pixels whose gradients are greater than a second threshold and that are in total pixels in each of the plurality of regions, and determining a region whose proportion is greater than a third threshold as the at least one region.

17. The method according to any one of claims 5 to 12, wherein
the side information of the residual feature map is used as the reconstructed side information of the residual feature map.

18. A method for decoding a region enhancement layer, comprising:

obtaining reconstructed pixels of a base layer of a target region;
inputting the reconstructed pixels into a correction network to obtain correction information of the target region;
obtaining an enhancement layer bitstream of the target region;
decoding the enhancement layer bitstream to obtain a residual feature map of an enhancement layer of the target region; and
inputting the residual feature map and the correction information into a decoding network to obtain reconstructed pixels of the enhancement layer of the target region.

19. The method according to claim 18, wherein the inputting the reconstructed pixels into a correction network to obtain correction information of the target region comprises:
inputting the reconstructed pixels into the correction network to obtain at least one of a plurality of pixel values and a plurality of feature values of the target region, wherein the correction information is the plurality of pixel values or the plurality of feature values.

20. The method according to claim 18 or 19, wherein the decoding the enhancement layer bitstream to obtain a residual feature map of an enhancement layer of the target region comprises:

obtaining a plurality of probability distributions based on the correction information, wherein the plurality of probability distributions correspond to a plurality of feature value bitstreams comprised in the enhancement layer bitstream; and
performing entropy decoding on the corresponding feature value bitstreams in the enhancement layer bitstream based on the plurality of probability distributions respectively to obtain the residual feature map.

21. The method according to claim 20, wherein the obtaining a plurality of probability distributions based on the correction information comprises:
inputting the correction information into a probability estimation network to obtain the plurality of probability distributions.

22. The method according to claim 20, wherein the obtaining a plurality of probability distributions based on the correction information comprises:
obtaining the plurality of probability distributions based on the correction information and reconstructed side information of the residual feature map.

23. The method according to claim 22, wherein the obtaining the plurality of probability distributions based on the correction information and reconstructed side information of the residual feature map comprises:

when the correction information is the plurality of feature values, inputting the reconstructed side information into a side information processing network to obtain a first feature map; and
inputting the plurality of feature values and the first feature map into a probability estimation network to obtain the plurality of probability distributions.

24. The method according to claim 22, wherein the obtaining the plurality of probability distributions based on the correction information and reconstructed side information of the residual feature map comprises:

when the correction information is the plurality of pixel values, inputting the plurality of pixel values into a feature estimation network to obtain a second feature map;
inputting the reconstructed side information into a side information processing network to obtain a first feature map; and
inputting the first feature map and the second feature map into a probability estimation network to obtain the plurality of probability distributions.

25. The method according to claim 18 or 19, wherein the decoding the enhancement layer bitstream to obtain a residual feature map of an enhancement layer of the target region comprises:

obtaining a plurality of probability distributions based on reconstructed side information of the residual feature map, wherein the plurality of probability distributions correspond to a plurality of feature value bitstreams comprised in the enhancement layer bitstream; and
performing entropy decoding on the corresponding feature value bitstreams in the enhancement layer bitstream based on the plurality of probability distributions respectively to obtain the residual feature map.

26. The method according to claim 25, wherein the obtaining a plurality of probability distributions based on reconstructed side information of the residual feature map comprises:
inputting the reconstructed side information into a probability estimation network to obtain the plurality of probability distributions.

27. The method according to claim 25, wherein the obtaining a plurality of probability distributions based on reconstructed side information of the residual feature map comprises:
obtaining the plurality of probability distributions based on the reconstructed side information and the reconstructed pixels.

28. The method according to claim 27, wherein the obtaining the plurality of probability distributions based on the reconstructed side information and the reconstructed pixels comprises:

inputting the reconstructed pixels into a feature estimation network to obtain a third feature map;
inputting the reconstructed side information into a side information processing network to obtain a first feature map; and
inputting the first feature map and the third feature map into a probability estimation network to obtain the plurality of probability distributions.

29. The method according to any one of claims 22 to 28, wherein the method further comprises:

inputting the residual feature map into a side information extraction network to obtain side information of the residual feature map; and
using the side information as the reconstructed side information of the residual feature map.

30. The method according to any one of claims 22 to 28, wherein the method further comprises:

obtaining a side information bitstream of the target region; and
parsing the side information bitstream to obtain the reconstructed side information.

31. The method according to any one of claims 18 to 30, wherein the decoding network comprises a first decoding network; and the inputting the residual feature map and the correction information into a decoding network to obtain reconstructed pixels of the enhancement layer of the target region comprises:

inputting the residual feature map into the first decoding network to obtain reconstructed residual pixels of the enhancement layer of the target region; and
when the correction information is the plurality of pixel values, summing the reconstructed residual pixels and corresponding pixel values in the correction information to obtain the reconstructed pixels.

32. The method according to any one of claims 18 to 30, wherein the decoding network comprises a second decoding network; and the inputting the residual feature map and the correction information into a decoding network to obtain reconstructed pixels of the enhancement layer of the target region comprises:

inputting the residual feature map into the second decoding network;
when the correction information is the plurality of feature values, summing an output of any convolutional layer in the second decoding network and corresponding feature values in the correction information; and
inputting a summation result into a network layer after the any convolutional layer in the second decoding network, to obtain the reconstructed pixels.

33. The method according to any one of claims 18 to 32, wherein the method further comprises:

obtaining a base layer bitstream of an image to which the target region belongs;
parsing the base layer bitstream to obtain a reconstructed image of a base layer of the image; and
determining, based on the reconstructed image, at least one region to be enhanced, wherein the target region is one of the at least one region.

34. The method according to claim 33, wherein the determining, based on the reconstructed image, at least one region to be enhanced comprises:

dividing the reconstructed image to obtain a plurality of regions; and
determining a region whose variance is greater than a first threshold in the plurality of regions as the at least one region; or
determining a proportion of pixels whose gradients are greater than a second threshold and that are in total pixels in each of the plurality of regions, and determining a region whose proportion is greater than a third threshold as the at least one region.

35. An encoding apparatus, comprising:

an obtaining module, configured to obtain reconstructed pixels of a base layer of a target region;
a processing module, configured to input the reconstructed pixels into a correction network to obtain correction information of the target region, and input the correction information and original pixels of the target region into an encoding network to obtain a residual feature map of an enhancement layer of the target region; and
an encoding module, configured to encode the residual feature map to obtain an enhancement layer bitstream of the target region.

36. The apparatus according to claim 35, wherein the processing module is specifically configured to input the reconstructed pixels into the correction network to obtain at least one of a plurality of pixel values and a plurality of feature values of the target region, wherein the correction information is the plurality of pixel values or the plurality of feature values.

37. The apparatus according to claim 35 or 36, wherein the encoding module is specifically configured to perform the method according to any one of claims 3 to 17.

38. A decoding apparatus, comprising:

an obtaining module, configured to obtain reconstructed pixels of a base layer of a target region;
a processing module, configured to input the reconstructed pixels into a correction network to obtain correction information of the target region, wherein
the obtaining module is further configured to obtain an enhancement layer bitstream of the target region; and
a decoding module, configured to decode the enhancement layer bitstream to obtain a residual feature map of an enhancement layer of the target region, wherein
the processing module is further configured to input the residual feature map and the correction information into a decoding network to obtain reconstructed pixels of the enhancement layer of the target region.

39. The apparatus according to claim 38, wherein the processing module is specifically configured to input the reconstructed pixels into the correction network to obtain at least one of a plurality of pixel values and a plurality of feature values of the target region, wherein the correction information is the plurality of pixel values or the plurality of feature values.

40. The apparatus according to claim 38 or 39, wherein the decoding module is specifically configured to perform the method according to any one of claims 20 to 34.

41. An encoder, comprising:

   one or more processors; and
   a memory, configured to store one or more programs, wherein
   when the one or more programs are executed by the one or more processors, the one or more processors are enabled to implement the method according to any one of claims 1 to 17.

42. A decoder, comprising:

   one or more processors; and
   a memory, configured to store one or more programs, wherein
   when the one or more programs are executed by the one or more processors, the one or more processors are enabled to implement the method according to any one of claims 18 to 34.

43. A computer-readable storage medium, comprising a computer program, wherein when the computer program is executed on a computer, the computer is enabled to perform the method according to any one of claims 1 to 34.

44. A computer program product, comprising instructions, wherein when the instructions are run on a computer or a processor, the computer or the processor is enabled to implement the method according to any one of claims 1 to 34.

FIG. 1

Source
device 12

Image source 16

Image data 17

Pre-processor 18

Pre-processed
image data 19

Encoder 20

Encoded
image data 21

Communication
interface 22

Training
engine
25

Communication
channel 13

Destination
device 14

Display device 34

Post-
processed
image data 33

Post-processor 32

Decoded
image data 31

Decoder 30

Communication
interface 28

Encoded
image data 21

FIG. 2A

EP 4 492 786 A1

40

Imaging device 41

Antenna 42

Processing circuit 46

Video encoder 20

Video decoder 30

Processor 43

Memory 44

Display device 45

Video coding system 40

FIG. 2B

400

Video coding device

410

420

Processor

430

Coding module

470

Receiver unit

Transmitter unit

440

450

460

Memory

Downlink port

Uplink port

FIG. 3

500

502

Processor

518

Display

512

Data — 506

Application: 1 ...

Application: Video coding

Application: ... N

510

Operating system — 508

504

FIG. 4

Camera

Image/Video → AI image/ video encoding → Storage/ Transmission → AI image/ video decoding → Reconstructed image/video

**FIG. 5**

Compression process

Image/Video → Encoding network → Entropy estimation → Entropy encoding → Saving → Bitstream/ Image file

Reconstructed image/video ← Decoding network ← Entropy decoding ← Entropy estimation ← Loading ← Bitstream/ Image file

Decompression process

**FIG. 6**

Compression
process

Local side | Cloud

Image/Video

| JPEG encoding | Uploading | JPEG decoding | Encoding network | Entropy estimation | Entropy encoding | Saving |

Bitstream/
Image file

| JPEG decoding | Downloading | JPEG encoding | Decoding network | Entropy decoding | Entropy estimation | Loading |

Reconstructed
image/video

Decompression
process

FIG. 7

EP 4 492 786 A1

<u>800</u>

```
┌─────────────────────────────────┐
│  Obtain reconstructed pixels of a base │ ⟋  801
│     layer of a target region    │
└─────────────────────────────────┘
                │
                ▼
┌─────────────────────────────────┐
│   Input the reconstructed pixels into a │ ⟋  802
│   correction network to obtain correction │
│     information of the target region │
└─────────────────────────────────┘
                │
                ▼
┌─────────────────────────────────┐
│   Input the correction information and │
│   original pixels of the target region into │
│  an encoding network to obtain a residual │ ⟋  803
│   feature map of an enhancement layer of │
│          the target region       │
└─────────────────────────────────┘
                │
                ▼
┌─────────────────────────────────┐
│    Encode the residual feature map to │ ⟋  804
│  obtain an enhancement layer bitstream │
│         of the target region     │
└─────────────────────────────────┘
```

FIG. 8

FIG. 9a

FIG. 9b

FIG. 9c

FIG. 9d

Original pixels

A plurality of pixel values

conv 192 × 3 × 3/2 ↓

GDN

conv 192 × 3 × 3/2 ↓

GDN

First encoding network

conv 192 × 3 × 3/2 ↓

GDN

conv 192 × 3 × 3/2 ↓

Residual feature map

FIG. 10a

Original pixels

conv 192 × 3 × 3/2 ↓

GDN

conv 192 × 3 × 3/2 ↓

A plurality of feature values ─────────────→○          Second encoding network

GDN

conv 192 × 3 × 3/2 ↓

GDN

conv 192 × 3 × 3/2 ↓

Residual feature map

FIG. 10b

A plurality of pixel values

FIG. 11a

A plurality of feature values

FIG. 11b

1200

Obtain reconstructed pixels of a base layer of a target region — 1201

Input the reconstructed pixels into a correction network to obtain correction information of the target region — 1202

Obtain an enhancement layer bitstream of the target region — 1203

Decode the enhancement layer bitstream to obtain a residual feature map of an enhancement layer of the target region — 1204

Input the residual feature map and the correction information into a decoding network to obtain reconstructed pixels of the enhancement layer of the target region — 1205

FIG. 12

Residual feature map

conv 192 × 3 × 3/2 ↓

GDN

conv 192 × 3 × 3/2 ↓

GDN

First decoding network

conv 192 × 3 × 3/2 ↓

GDN

conv 192 × 3 × 3/2 ↓

Reconstructed
residual pixels

⊕ ← A plurality of pixel values

Reconstructed pixels

FIG. 13a

Residual feature map

conv 192 × 3 × 3/2 ↓

GDN

conv 192 × 3 × 3/2 ↓

A plurality of feature values ⟶ ⊕   Second decoding network

Reconstructed
residual pixels

GDN

conv 192 × 3 × 3/2 ↓

GDN

conv 192 × 3 × 3/2 ↓

Reconstructed pixels

FIG. 13b

FIG. 14

EP 4 492 786 A1

FIG. 15

EP 4 492 786 A1

x → Encoder1 —— Bitstream1 —— Decoder1 → xc

Decoder1 → xc1

Correction network

p

Side information extraction network — z — Q — $\hat{z}$ — AE — Bitstream3 — AD — $\hat{z}$ — Side information processing network

Feature extraction network

Probability estimation network

Encoder2 — y — Q — AE — Bitstream2 — AD — $\hat{y}$ — IQ — $\tilde{y}$ — Decoder2 → xd

FIG. 16

FIG. 17

EP 4 492 786 A1

Encoding apparatus 1800

Obtaining module 1801

Processing module 1802

Encoding module 1803

FIG. 18

Decoding apparatus 1900

Obtaining module 1901

Processing module 1902

Decoding module 1903

FIG. 19

## INTERNATIONAL SEARCH REPORT

| International application No. |
| --- |
| **PCT/CN2023/084290** |

### A. CLASSIFICATION OF SUBJECT MATTER

H04N19/33(2014.01)i

According to International Patent Classification (IPC) or to both national classification and IPC

### B. FIELDS SEARCHED

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT; WPABSC; ENTXTC; DWPI; CNKI; IEEE; JVET: 编码, 残差, 残余, 调整, 分布, 概率, 基本层, 基本流, 基础层, 基础流, 可分层, 可分级, 可扩展, 可伸缩, 模型, 偏移, 神经网络, 视频, 特征, 图片, 图像, 像素, 校正, 修正, 增强, 帧, 重构, 重建, Encode, residual, adjusting, distribution, probability, base layer, elementary stream, hierarchical, scalable, model, offset, neural network, video, feature, picture, image, pixel, correction, revision, enhancement, frame, reconstruction

### C. DOCUMENTS CONSIDERED TO BE RELEVANT

| Category* | Citation of document, with indication, where appropriate, of the relevant passages | Relevant to claim No. |
| --- | --- | --- |
| X | CN 112702604 A (BEIJING DAJIA INTERNET INFORMATION TECHNOLOGY CO., LTD.) 23 April 2021 (2021-04-23) description, paragraphs 2-176 | 1, 2, 18, 19, 35, 36, 38, 39, 41-44 |
| Y | CN 112702604 A (BEIJING DAJIA INTERNET INFORMATION TECHNOLOGY CO., LTD.) 23 April 2021 (2021-04-23) description, paragraphs 2-176 | 3-17, 20-34, 37, 40 |
| Y | WO 2022068716 A1 (HUAWEI TECHNOLOGIES CO., LTD.) 07 April 2022 (2022-04-07) description, paragraphs 2-392 | 3-17, 20-34, 37, 40 |
| A | CN 113628115 A (GUANGDONG OPPO MOBILE COMMUNICATIONS CO., LTD.) 09 November 2021 (2021-11-09) entire document | 1-44 |
| A | CN 104685879 A (DOLBY LABORATORIES LICENSING CORP.) 03 June 2015 (2015-06-03) entire document | 1-44 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 July 2023** | **07 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/084290**

| Patent document cited in search report | | | Publication date (day/month/year) | Patent family member(s) | | | Publication date (day/month/year) |
|---|---|---|---|---|---|---|---|
| CN | 112702604 | A | 23 April 2021 | None | | | |
| WO | 2022068716 | A1 | 07 April 2022 | None | | | |
| CN | 113628115 | A | 09 November 2021 | None | | | |
| CN | 104685879 | A | 03 June 2015 | EP | 3255890 | A2 | 13 December 2017 |
| | | | | EP | 3255890 | A3 | 28 February 2018 |
| | | | | EP | 3255890 | B1 | 19 August 2020 |
| | | | | KR | 20150060736 | A | 03 June 2015 |
| | | | | KR | 101806101 | B1 | 07 December 2017 |
| | | | | IL | 237562 | A0 | 30 April 2015 |
| | | | | IL | 237562 | A | 31 December 2017 |
| | | | | EP | 2901689 | A1 | 05 August 2015 |
| | | | | JP | 2015537409 | A | 24 December 2015 |
| | | | | JP | 6152421 | B2 | 21 June 2017 |
| | | | | CA | 2884500 | A1 | 03 April 2014 |
| | | | | CA | 2884500 | C | 05 September 2017 |
| | | | | EP | 3748969 | A1 | 09 December 2020 |
| | | | | SG | 11201502435 | XA | 28 May 2015 |
| | | | | UA | 111797 | C2 | 10 June 2016 |
| | | | | AU | 2013323836 | A1 | 19 March 2015 |
| | | | | AU | 2013323836 | B2 | 07 December 2017 |
| | | | | RU | 2595966 | C1 | 27 August 2016 |
| | | | | IN | 2130 | DEN2015A | 14 August 2015 |
| | | | | MY | 172388 | A | 22 November 2019 |
| | | | | WO | 2014052292 | A1 | 03 April 2014 |
| | | | | MX | 2015003865 | A | 17 July 2015 |
| | | | | MX | 346164 | B | 08 March 2017 |
| | | | | US | 2017264905 | A1 | 14 September 2017 |
| | | | | BR | 112015006551 | A2 | 04 July 2017 |
| | | | | BR | 112015006551 | B1 | 06 December 2022 |
| | | | | HK | 1205838 | A1 | 24 December 2015 |
| | | | | US | 2015326865 | A1 | 12 November 2015 |
| | | | | TW | 201419871 | A | 16 May 2014 |
| | | | | TWI | 581613 | B | 01 May 2017 |
| | | | | US | 2016286225 | A1 | 29 September 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210365196